# EUROPEAN PATENT SPECIFICATION

(11) **EP 2 511 085 B1**
(45) Date of publication and mention of the grant of the patent: **28.02.2018**
(21) Application number: 12163771.4
(22) Date of filing: 11.04.2012
(51) Int. Cl.: B29D 28/00, E02D 17/20, E02D 29/02

(54) **A product having a net structure**
Produkt mit einer Netzstruktur
Produit ayant une structure de filet

(30) Priority: 11.04.2011 IT MI20110604; 11.04.2011 IT MI20110607; 11.04.2011 IT MI20110608
(43) Date of publication of application: 17.10.2012
(73) Proprietor: Tenax S.p.A., 23897 Viganò (Lecco) (IT)
(72) Inventor: De Giuseppe, Giulio, I-23897 VIGANO' (LC) (IT)
(74) Representative: Sutto, Luca

(56) References cited:
- US-A- 4 152 479
- US-A- 4 374 798
- US-A- 4 610 568
- "Tensar Triax (TX) and Biaxial (BX) Geogrids - Installation Guide", , 31 December 2010 (2010-12-31), Retrieved from the Internet: URL:http://nilex.com/sites/default/files/n ilex-biaxial-bx-geogrid-installation-guide .pdf [retrieved on 2016-05-09]

## Description

### FIELD OF THE INVENTION

The invention relates to a series of two or more reinforcing elements applicable for reinforcing artificial structures. Examples of application are represented by natural slopes which require consolidation and/or reinforcement, such as green walls, block walls, artificial walls, coverings for rocky slopes, rockfall repairs, sound-absorbing barriers, valley protection against rockfalls and railway beddings.

A further example of an application is for stabilizing yielding terrains as well as consolidation of road beds, parking areas, and finally the realizing of coastal protection systems, and the realization of columns for consolidation.

### STATE OF THE ART

As is known, net elements are present on the market, used for the reinforcement, containment, stabilization and/or the consolidation of terrain.

A first example relates to a net element or grid structure made of a substantially flat plastic material. The element is stretched in the manufacturing process of the product in two directions such as to increase the structural strength thereof in both directions and the possibility of confining the meshes between the covering material. The shape of the product makes it suitable as a stabilizer or containing element or otherwise for use where an action of reinforcement and stabilization is required, substantially uniform in all directions of the lie plane of the net structure. It should be noted in fact that the openings in the grid, substantially square, to a certain extent enable interlocking with the granules present in the soil and the cooperation with the same.

The net element is obtained by subjecting the extruded or perforated product first to a stretching action in the longitudinal direction, with the passage of rollers rotating at different speeds, and then in the transversal direction via the action of an orthopedic implant for transverse stretching.

A second example concerns reinforcing structures made of a plastic material and composed of a reticular structure having a series of substantially stretched longitudinal elements and a series of transversal elements substantially not stretched. These elements create meshes with elongate apertures which can be inserted in the terrain to be strengthened during the depositing of the structures in place. The reinforcing structure is obtained by extrusion or perforation of sheets and then by stretching in the exiting direction from the extruder, and exhibits parallel longitudinal elements at a fixed distance and a length that is adjustable according to requirements. The reticular structure is in fact subjected to unidirectional stretching along the exit direction from the extruder, and then cut transversally; the grid thus obtained has a good tensile strength in the direction of the longitudinal elements, and the ability to contain and reinforce terrain. Note that the openings in the grid, of substantially rectangular shape, allow a certain amount interlocking with the granules present in the terrain and co-operation with them too, and the pronounced thickness of the non-stretched transversal elements ensures a good anchoring capability. It should however be noted that the orientation of the maximum resistance direction coincides with that of the exiting direction from the extruder and this entails major limitations at the level of application and implementation due to the limited dimension of the width of the finished product available today.

At present, in fact, the product reaches a maximum width of two metres and in existing applications, the task of laying the element along the direction to be reinforced means having to constantly repeat the process of sectioning the product into many strip such as to create panels in a sufficient number to match the dimensions of the work area, and then the panels have to be laid side by side.

A further drawback is that the existing panels are not interconnectable along the sides and therefore, in order to make the reinforcement continuous panels are partially overlapped, with an ensuing waste of material.

Also, the anchoring along the reinforcing direction is at present possible only along the ends of each panel which are of limited size and therefore not efficient for uses where it is necessary to cover areas of significant extension.

Further examples of net structures are described in documents US 4,756,946, US 4,374,798, US 4,743,486, US 5,269,631, US 5,267,816 US5419659, EP0418104A2, US 5,053,264, and US 4,610,568.

### SUMMARY OF THE INVENTION

A first aim of the present example is to obviate one or more of the limitations and drawbacks of the preceding solutions.

A further aim of the invention is to disclose a product, which can be wound in a roll form, having considerable dimensions, constituted by a reinforcing element having excellent mechanical resistance characteristics and at the same time a novel use mode and good flexibility of use.

An additional aim of the invention is to provide a product which enables simplifying the onsite operation, reducing times and costs of installation.

An additional aim of the invention is to provide a product which can enable realizing reinforcing and stabilizing areas of significant dimensions.

A further aim is to disclose a production process for efficient manufacture of a rolled product and/or of a reinforcing element which is usable for geotechnical applications.

A further aim of the invention is to provide terrain consolidation processes that are effective and easy to lay.

Finally, an aim of the invention is to disclose a product and/or a reinforcing element which can satisfy various product demands thanks to the possibility of easily varying the configuration of the meshes of the net structure.

One or more of the set aims are attained by a series of two or more reinforcing elements as described in the accompanying claims.

### BRIEF DESCRIPTION OF THE DRAWINGS

Some embodiments will be described in the following with reference to the accompanying drawings, provided purely by way of non-limiting example, in which:
Figure 1 is a perspective view of a product in roll; the product is shown partially unrolled along the direction of the first elements to highlight the meshes of the grid;
Figure 1A is a perspective view of a traditional product in roll form;
Figure 2A shows a production line of the product of figure 1;
Figure 2B is a schematic view, in a view from above, of a step of transversal stretching of the production process for the realization of a single-stretched product, or a substantially single-stretched product in a net structure;
Figures 2C-2E schematically show a step of folding second fold lines parallel to the first longitudinal elements: the three figures show the alternative folding mode;
Figures 3A and 3B illustrate a semi-reticular structure used for the realization of a reinforcing element, for example by transversal stretching as shown in figure 2B;
Figure 4 is a plan view of a single-stretched reinforcing element obtainable from the semi-finished product shown in figures 3A or 3B;
Figure 5A shows an enlarged detail of the blank of figure 3A after the application of a transversal stretching action as shown in figure 2B;
Figure 5B shows an enlarged detail of the semi-finished workpiece of figure 3B after the application of a transversal stretching action as shown in figure 2B;
Figure 5C is a view from above of a portion of the semi-finished workpiece of figure 3B subsequently to an action of transversal stretching as shown in figure 2B;
Figure 6 shows a section along line VI-VI of figure 5B;
Figure 6A is a perspective view of two reinforcing elements and connected to one another;
Figure 6B is a view from above of a portion of a reinforcing element arranged in an arched path;
Figure 6C is a detail of a connection of the two reinforcing elements of figure 6A;
Figure 7 is a perspective view showing a portion of a reinforcing element which extends transversally along a curved line, in accordance with a first type of application;
Figure 7A is a perspective view of a reinforcing element of figure 6 in a first working condition;
Figure 8 is a perspective view of the reinforcing element of figure 7 in the first working condition and operating around a tube sock;
Figure 9 is a view from above of the reinforcing element of figure 8;
Figure 10 is a perspective view of the reinforcing element of figure 7 in a second working condition around a tube sock;
Figure 11 is a view from above of the reinforcing element of figure 10;
Figure 12A is a schematic section of a portion of terrain in which reinforcing elements of the type of figure 10 are present;
Figure 12B is a view from above of a portion of terrain where a plurality of reinforcing elements of the type of figure 10 is applied;
Figure 13 shows a perspective view of a reinforcing element similar to the one shown in figures 8 or 10 and wound around an axis parallel to the first elements so as to define a substantially elliptical or rectangular closed profile with rounded edges;
Figure 14 is a perspective view of a reinforcing element of the type of figure 13 operating on a seabed, for example sea or river;
Figure 15 is a perspective view of a reinforcing element ;
Figure 16 is a schematic perspective of a step relating to a process for soil reinforcement utilizing the article of figure 15;
Figure 16A is a schematic perspective of a step relating to the process for terrain reinforcement utilizing the article of figure 1A;
Figure 17 is a lateral view of figure 16;
Figure 18A shows a lateral view of a step following the step of figure 17;
Figure 18B shows a lateral view of a step following the step of figure 18A;
Figure 18C shows a lateral view of a step following the step of figure 18B;
Figure 18D shows a lateral view of a step following the step of figure 18C;
Figure 19 shows a reinforcing element in an alternative configuration with respect to the configuration used in figure 15.
Figures 19A and 19B show the elements of figures 15 and 19, applied in building an artificial riverbank;
Figure 20 is a perspective view of two reinforcing elements and connected to one another;
Figure 21 is a schematic view, according to a perspective view of a process for consolidating road surfaces utilizing the product in roll form of figure 1;
Figures 22, 23 and 23A are schematic views in cross section of a roadway in which a reinforcing element is inserted;
Figure 24 and figure 25 are schematic views in cross-section of a railway bedding in which a reinforcing element of variants of the invention is inserted;
Figure 26 is a schematic view in cross-section of a block wall in which a reinforcing element is inserted;
Figure 27 is a schematic cross-section of a relief in which a reinforcing element according to a variant of the invention is inserted.

### DETAILED DESCRIPTION

### Product in roll form and reinforcing element

The rolled product and the reinforcing element described herein below relate to all applications that follow in the present description and, for that reason the description of the elements will not be repeated.

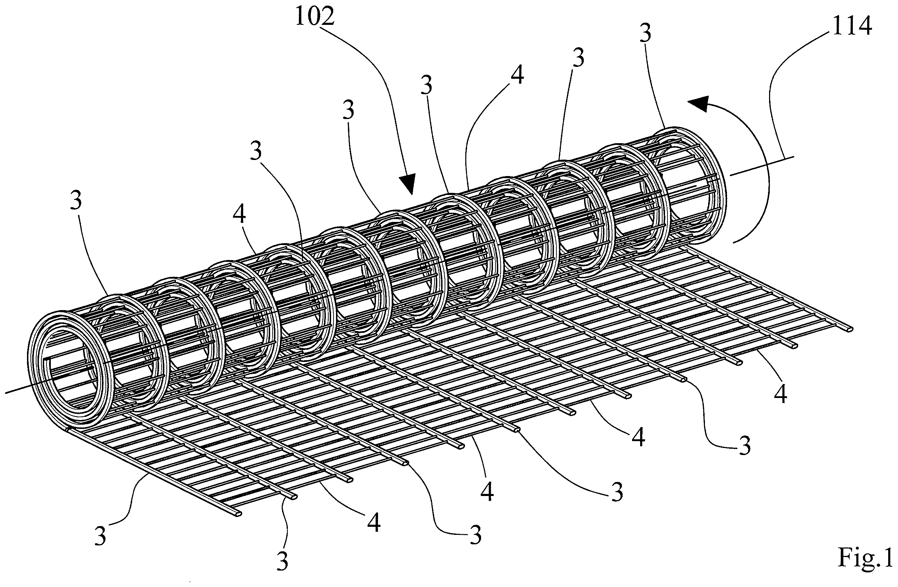

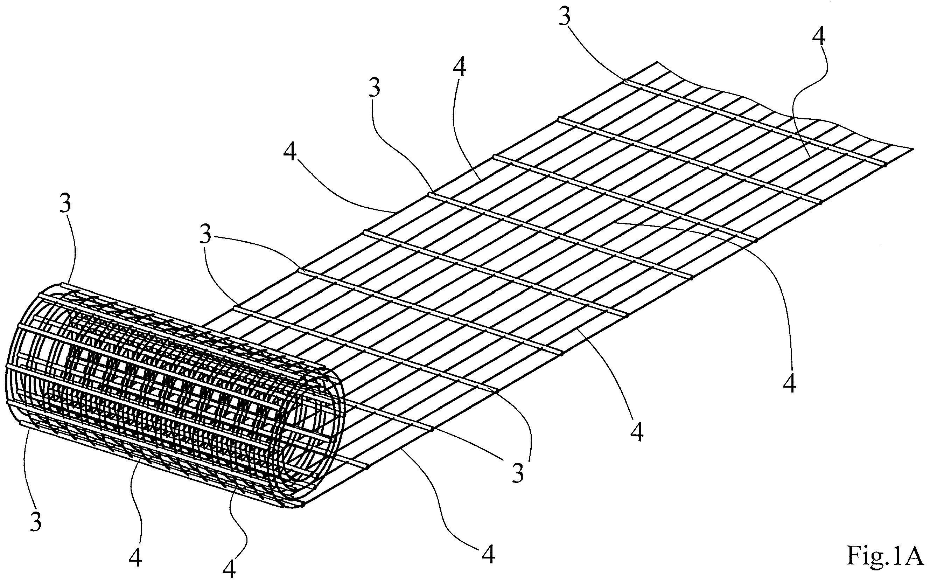

Figure 1 denotes a product in roll form 102, partially unwound, to be used in geotechnical applications. The product 102 comprises an integral mesh 2 (i.e. a monolithic net obtained in one piece and not the result of connections by gluing or weaving of various elongate elements) made of plastic material comprising a series of first elements, or bars, 3 placed longitudinally and parallel to one another; the first elements or bars 3 are spaced apart and interconnected by a plurality of second transversal elements 4; for example, they are also parallel to one another and stretched in the width direction of the roll.

In the present description, it is understood that each of the first elements extends over the entire length of the net structure formed by the plurality of portions aligned along a same longitudinal line of the net structure. Similarly, each of the second elements extending in the width direction of the net structure is formed by the plurality of portions aligned along a same transversal line to the net structure 2: in this way each of the first elements is intersected by a plurality of second elements, and each of the second elements is intersected by a plurality of first elements.

Depending on the degree of stretching, the second elements exhibit a more or less slim structure, which can also assume a filiform structure; in any case, the second elements have a transversal section that at a midpoint between two consecutive bars is substantially slimmer than the section of the bars. The product is wound along the first elements or bars 3 and about an axis 114 transversal to the bars themselves and for example parallel to the second elements 4, as shown in figure 1: in practice, the bars 3, which because of their section exhibit a greater resistance to folding than the second elements 4, are however wound a spiral trajectory. This is totally opposite with respect to traditional practice (figure 1A).

Going into further detail, the first elements or bars 3 exhibit a substantially unstretched structure (or at most slightly stretched) and a thickness (and a cross section) that is constantly greater than the thickness (and the cross section) of the second elements or wires 4. In this way, the first elements or bars 3 are more resistant to compression and capable of greater friction with the terrain than the second elements 4. The second elements 4, for example in the form of transversal wires, are connected to the bars and have a structure that is substantially stretched along the development thereof such as to give a greater tensile strength per unit area with respect to the bars.

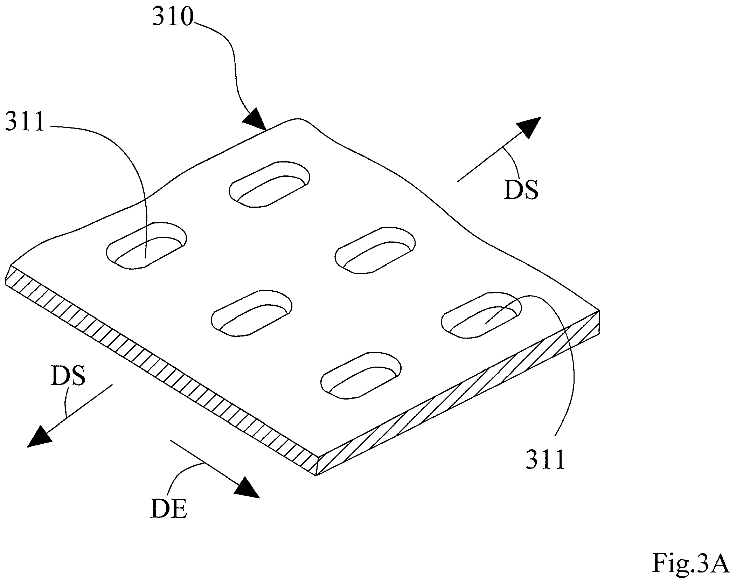

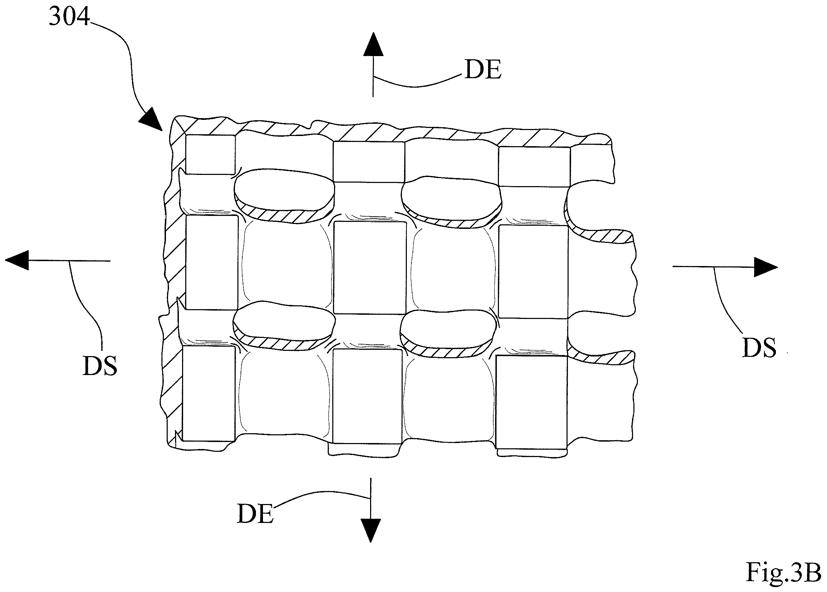

Figures 3A and 3B illustrate a respective semi-finished workpiece of a net structure used for the production of a rolled product 102. Figure 3A shows the case of a semi-finished workpiece obtained from an extruded sheet (calendered or laminated or printed) and then perforated (with through-holes or not), while figure 3B shows the case of a semi-finished workpiece obtained by extrusion of precursors of the first elements and contemporary forming of precursors of the second elements located transversally to the precursors of the first elements. As can be seen, in the first case a semi-finished workpiece is produced that has a constant thickness, apart obviously from the perforated zones, while in the second case the workpiece has a variably-extending thickness. By transversally stretching the precursors of the second elements 4 and winding the product thus obtained about a transversal axis to the first elements 3, the roller product 102 is obtained, as will be more fully explained in the following.

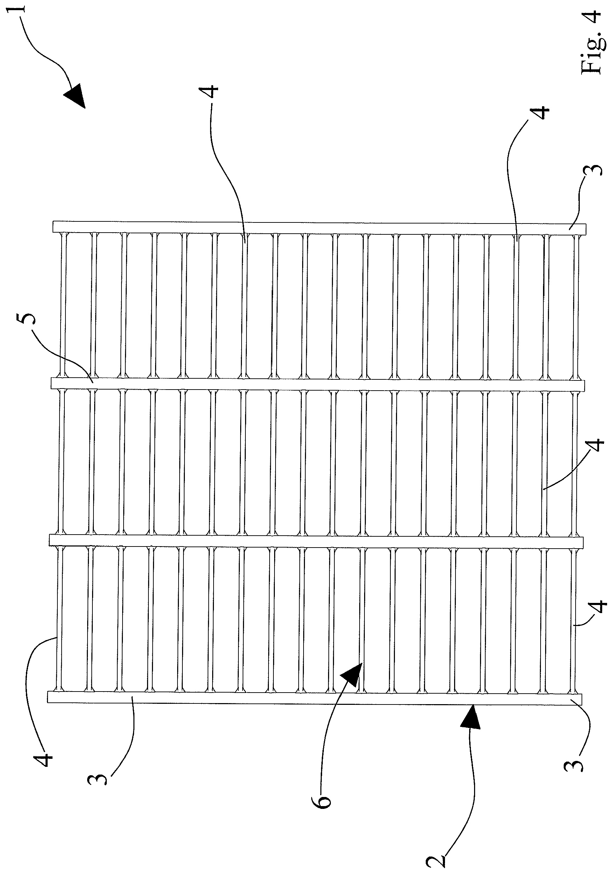

Figure 4 is a view from above of a single-stretched reinforcing element 1 obtainable by the unrolling of the product roll 102, which in turn is formed from the semifinished workpiece shown in figure 3A or from semi-finished workpiece of figure 3B: the first elements or bars 3 are generated continuously by the flow extrusion or by the continuous longitudinal configuration of the perforated sheet and have a length that is equal to the length of the roll and in any case greater than the overall length of the second transversal elements 4, or the width of the roll. The distance between bars or adjacent first elements can be controlled by varying the transversal stretching ratios.

The distance between adjacent second elements can be varied by modulating, depending on whether it starts from one or other of the semi-finished worpieces of figures 3A, 3B, the striking frequencies during punching of the plate or the application pitch of the precursors of second elements during the coextrusion process. This allows for a greater or lesser number of first and/or second elements 3, 4 and enables varying the thickness thereof, depending on the transversal stretching applied to the second elements 4 and the pitch between the first elements 3.

By applying opposing stretching forces of equal intensity the bars can be spaced evenly and are parallel and aligned, i.e. without bends or angles that would compromise correct use thereof. As already mentioned, figure 4 shows a reinforcing element 1 obtainable by unrolling and placing the unrolled article 102 flat. Consequently, the reinforcing element 1 comprises a monolithic net structure 2 made of plastic material having a plurality of the first elements 3 spaced apart and a plurality of the second elements 4 also spaced and transversally arranged with respect to the first elements; the elements 3 and 4 can be made of plastic materials selected according to their physical and mechanical characteristics, e.g. the elements 3 and 4 can be made from HDPE or polypropylene or still other polymers.

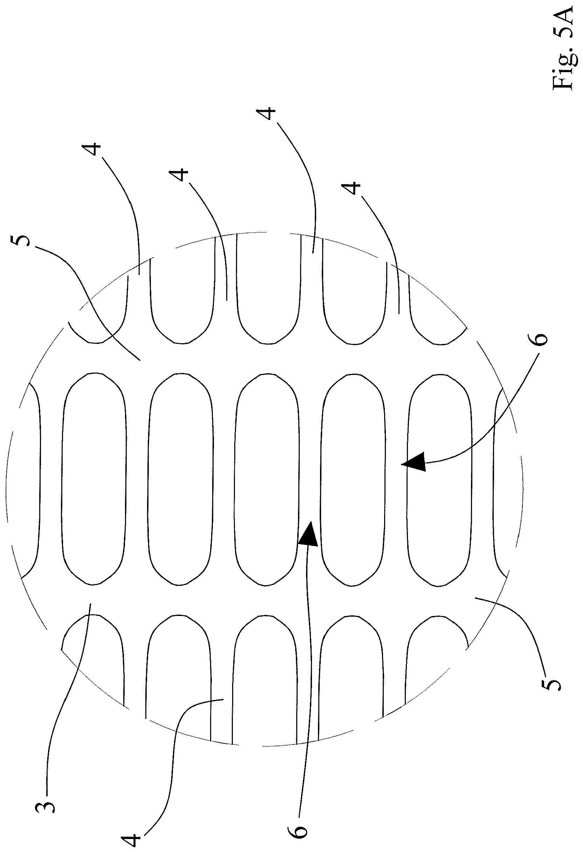

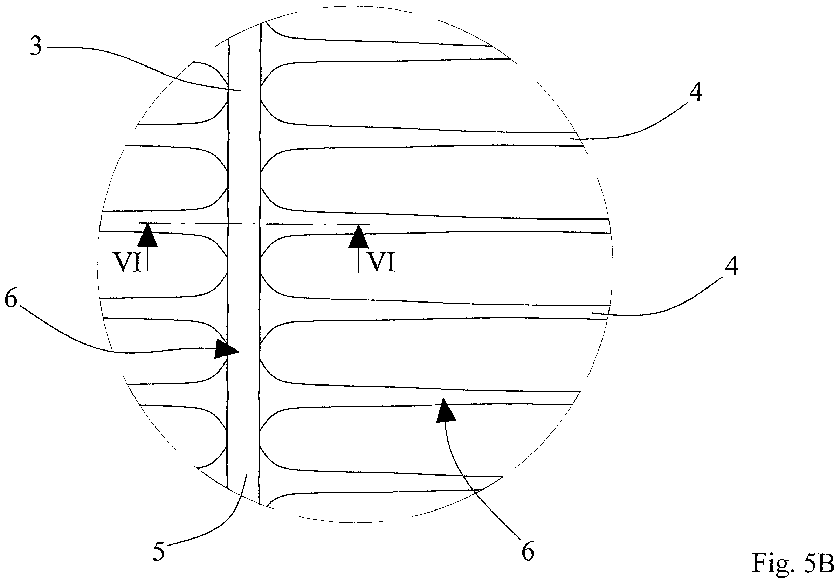

In figure 4, the first elements 3 and the second elements 4 intersect at nodes 5 to form the meshes. Each of these first and second elements 3, 4 exhibits portions 6 which extend between consecutive nodes 5. Because of transversal stretching action, the portions 6 of the second elements have end regions of a progressively decreasing section (measured perpendicular to the prevalent development direction of the second elements - see figures 5A and 5B) starting from a node in the direction of a centerline of the portions, and a central zone having a substantially constant section.

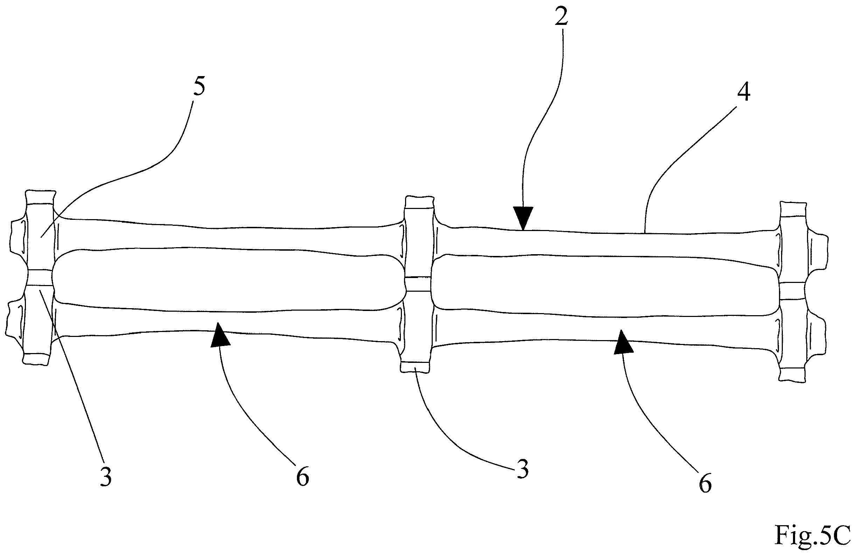

Depending on whether the net structure is derived from the blank of figure 3A (flat plate) or from that of figure 3B (strip having irregularities emerging from the prevalent development plane of the structure), the net structure respectively exhibits the conformation shown in figure 5A or the one shown in figures 5B and 5C.

Quantitatively, the distance between two first adjacent elements 3 is between 100 mm and 400 mm, optionally between 200 mm and 300 mm. Similarly, the distance between adjacent second elements 4 is between 10 mm and 50 mm, optionally between 20 mm and 40 mm. By varying these distance the mesh size is also varied, and may exhibit an area comprised between 1000 and 20,000 mm2.

From the figures it can be noted that the second elements 4 are placed transversally, for example at right angles, with respect to the first elements. The first elements 3 are continuous longitudinal elements, with a length that is appreciably greater than the sum of the length of the portions 6 forming any second element 4: for example the first elements may be two and preferably five to one hundred times longer than the second elements.

Going into further detail the size of the elements that make up the net structure 2 can be defined. As can be seen from the accompanying figures, the first elements 3 are substantially not stretched (or at most slightly stretched, but always to a lesser degree than the degree of stretching of the second elements) and have significantly greater size and thickness than the second elements 4, which is a choice deriving from the fact of having to confer a certain rigidity to the reinforcing element 1 and a good anchoring ability. The second elements 4, being stretched and of markedly reduced section, instead ensure flexibility and excellent resistance to traction. In fact the first elements 3, according to a section that is transversal to the prevalent development direction thereof have an area of greater than 20 mm², optionally greater than 30 mm².

The second elements 4, according to a transversal section to the prevalent development direction thereof, have an area of greater than 3 mm², optionally greater than 4mm². The thinning of the second elements is caused by the stretching process which leads to the reduction in the area of the cross section and the longitudinal elongation of the second elements. The stretching ratio or the ratio between the length of the second elements after the stretching and the length of the second elements before stretching is at least 3, optionally between 3 and 8, more optionally between 4 and 7. Note that it is possible to slightly stretch the first elements (such as a stretching resulting in a stretching ratio not exceeding 1.25), provided that the first elements retain the dimensions described above in terms of longitudinal extension and cross-section area.

The stretching of the elements can be controlled, since the process is able to arrange the molecular chains that form the second elements in an arrangement that is markedly oriented along the prevalent development direction of the second elements themselves. In case the first elements are lightly stretched, the molecular chains of said elements exhibit an orientation along the same first elements, but in a manner which is less pronounced compared to that of the second elements (at molecular chain level the molecular orientation is less pronounced in the first elements than in the second elements. As mentioned, the stretching process is performed along the development of the second elements 4 after the forming of the net conformed semi-finished workpiece of figure 3A or 3B. The stretching process gives the second elements 4 a greater tensile strength and better flexibility.

The thus-obtained reinforcing element, which as mentioned is made of a plastic material, has a specific weight of from 200 to 1200 g per m² and a specific resistance to traction, along the second elements, of greater than 20 KN/m, in particular between 20 and 200 KN/m, optionally between 60 and 200 KN/m. The specific resistance strength is measured by the method set down in the EN ISO 10319 standard.

For the sake of completeness, it should be noted that, irrespective of their possible stretching, the first elements 3 can also undergo a slight deformation, due to the passage between rollers and cohesion with the second elements 4, in particular at and in proximity of the nodes 5.

The examples illustrated in the figures show only a net structure 2 mono-stretched along the second elements 4. Although the net structure 2 has two prevalent development directions (i.e. the directions in which the first and second elements extend), the structure 2 also has a certain size, or thickness S, at right angles to these prevalent development directions (see figure 5A where the extension in a third dimension is particularly evident at the first elements) giving the element 1 a three-dimensional structure that is well-differentiated with respect to sheet materials. In particular, the maximum thickness "S" of the net structure is greater than 3 mm, for example 4 or 5 mm. The thickness "S" is defined by the maximum distance between opposite sides of the net structure. Figure 5A illustrates the dimensional difference between the thickness of the first and second elements 3 and 4: the second elements 4 having undergone the process of stretching have a thickness "t" at an intermediate zone between two consecutive nodes 5 that is much smaller than the thickness S of the first elements 3.

The elongate shape of the second elements gives the reinforcing element excellent flexional capability, and in particular enables the structure 2 to flex freely according to at least a transversal axis substantially parallel to the first elements 3.

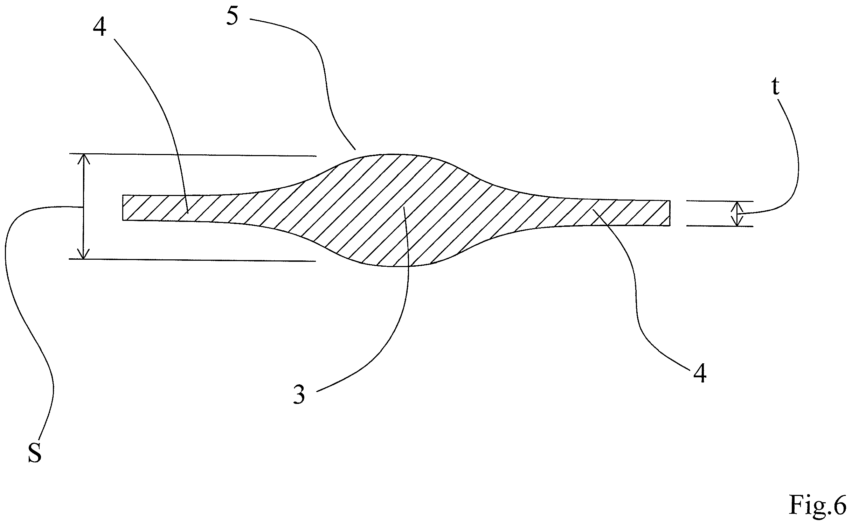

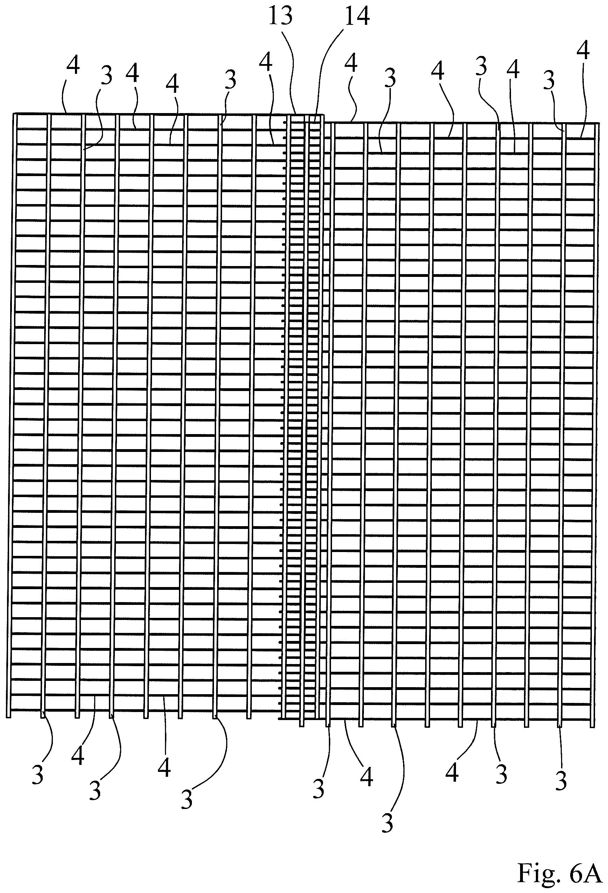

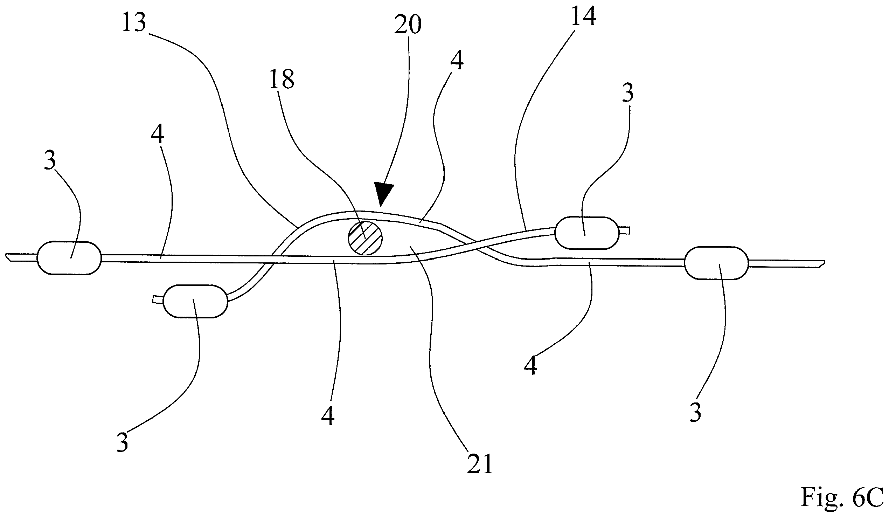

It should be specified that the reinforcing element can be used in series (see figure 6A) in which two or more elements are flanked along the longitudinal edges 13 and 14 and are arranged such as to define an overlap zone 19 which comprises a plurality of slots 20 which form passage openings 21 delimited by the segments 22 of the second elements 4 of mutually overlapping flaps 13 and 14. The slots 20 are aligned in a direction parallel to the first elements, forming a coupling area 23. A blocking element 18 is inserted through the slots such as to cooperate with portions of the second elements of the two overlapping flaps 13 and 14. In practice, the blocking element may comprise a cylindrical body or bar, as shown in figure 6C.

Furthermore, two or more blocking elements can be provided, consecutive to one another along the longitudinal development of the reinforcing element 1.

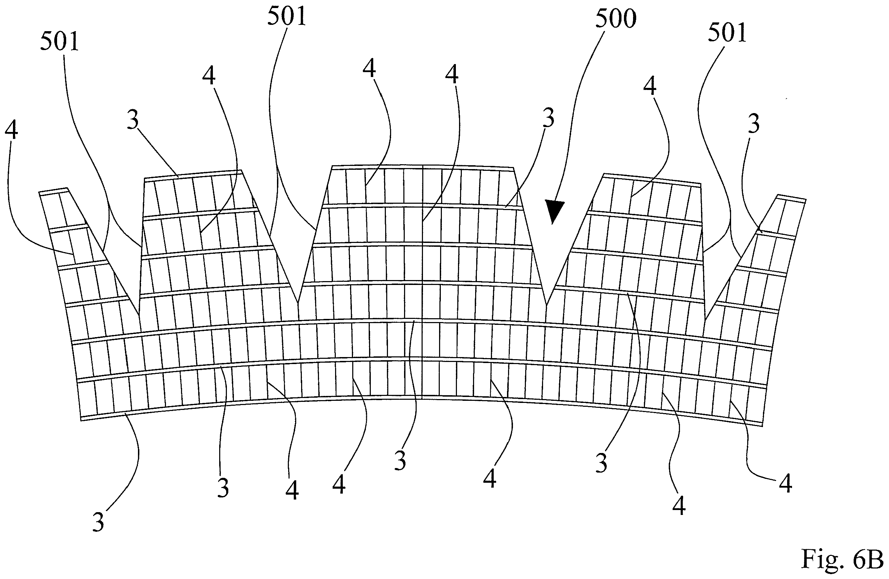

In figure 6B, lastly, a case is illustrated in which a reinforcing element exhibits recesses 500 at least at a longitudinal flap 13 or 14, so that the element itself can be arranged in an arched trajectory. The recesses can be obtained by transversal slotting to form converging edges 501 and are for example arranged longitudinally spaced, for example in a regular pattern. Moreover, these recesses affect only one part of the transversal development of the element, for example less than 50% of the width of the element so that the element still retains good mechanical strength properties.

### Production of the article in roll form and of the reinforcing element.

The product in roll form and the reinforcing element can be realized with the procedures described below regardless of the applications that are then in the present description; therefore, the description of the manufacturing processes will not be repeated.

The reinforcing element 1 and the product roll 102 are made of a plastic material (such as HDPE or polypropylene).

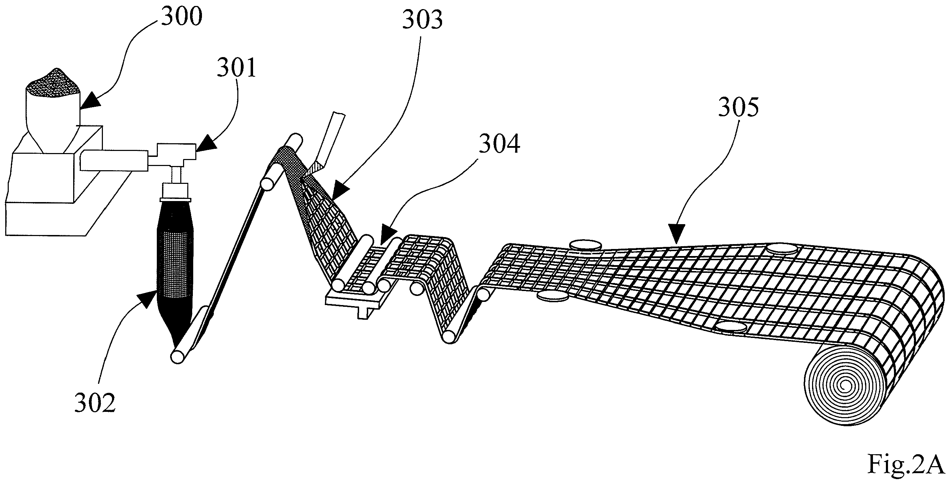

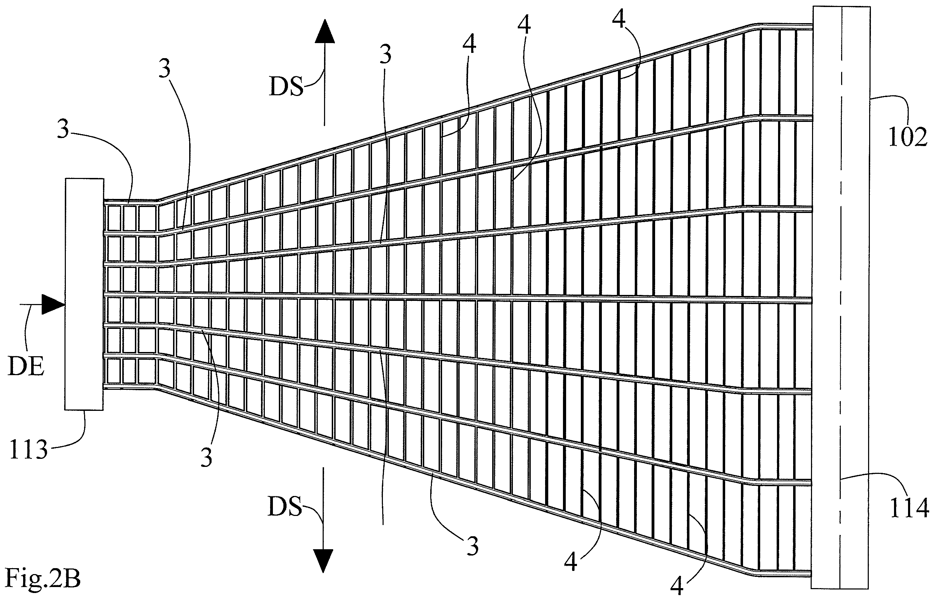

The first and second elements 3, 4 are made by a simultaneous extrusion process. For example as seen in figure 2A, the plastic material is fed from a hopper 300 and then moved towards an extrusion head 301. At the extrusion head, the first elements 3 (or precursors of the same elements) are extruded elements and precursors of the second elements are coextruded transversally to the first elements, forming an integral reticular and tubular body 302 in output from the extrusion head. The body 302 is therefore a monolithic plastic body. Subsequently the body arrives at a cutting station 303 which forms the longitudinal semi-finished reticular structure 304 of figure 3B.

After formation of the semi-finished reticular structure 304, the structure 304 is stretched in the retractor 305 only along the development of the second elements in order to confer sufficient length thereto; alternatively the net structure 2 can be stretched along the development of both the first elements and the second elements within the limits described above.

It should be noted that the first elements 3 are parallel to the direction of exit from the extrusion station DE and that the stretching of the second elements 4 occurs in a transversal direction DS to the extrusion direction. In this way first and second elements are obtained that are high-performance elements of arbitrary length, as the extruder can provide, in principle, indefinite lengths.

With the stretching the reinforcing element can increase its tensile strength, obtained by bringing the net structure to a temperature of higher than 80°C, and subsequently by gripping the transversal edges to effect the pull along the development of the second elements. The net structure is brought to the stretching temperature by a process of heating by convection of hot air, or in hot water baths, or using other heating systems.

Alternatively to what is described a semi-finished workpiece of the type illustrated in figure 3A can be realized, produced from a sheet 310, for example by extrusion or calendering. In this case too, however, a direction of advancement of the sheet material can be defined (i.e. a direction of extrusion or calendering). The sheet is then perforated (with through holes 311 or not, for example by cutting or punching or other processes). Then the sheet is stretched transversally: in this case too the first elements 3 are parallel to the exit direction from the extrusion station DE of the sheet (or the advancement of the sheet) and the ironing of the second elements occurs in a transversal direction to the extrusion direction DS (or the sheet advancement direction). In this way high-performance second elements are obtained, and first elements of arbitrary length.

Thanks to the described process first elements are obtained positioned at a distance that varies as a function of the stretching ratio applied transversally while the second elements move away from one another as a function of the extrusion head pulsation frequency (i.e. the frequency of application of the precursors of the second elements transversely to the first elements in the extrusion head immediately after the formation of precursors of the first elements themselves); or a frequency of perforation should the process start from sheet material, such as to obtain a mesh size that varies depending on requirements and during a same production process.

The net structure is then cut transversally to the first elements to a predetermined length, measured in the direction of the first elements or the longitudinal elements. The measurement of this length is typically greater and depends on the application; however, it is possible to have lengths of the first elements of up to 10, 50 or even 100 metres. The measurement of the width is also dependent on the application; however, a width of up to 2, 4 or even 8 metres can be obtained.

Lastly, the net structure can be formed in a roll along an transversal winding axis, for example perpendicular to the prevalent development direction of the first elements, such as to form a roll of product that is easier to transport. Note that the roll-winding can take place even before the transversal cutting: in other words a winding station can be provided downstream of the stretching and proceed to the roll-winding of the net structure; once a rolled product has been attained of predetermined dimensions, the net structure can be cut transversally to the prevalent development direction of the first elements, before proceeding to the formation of a new product roll.

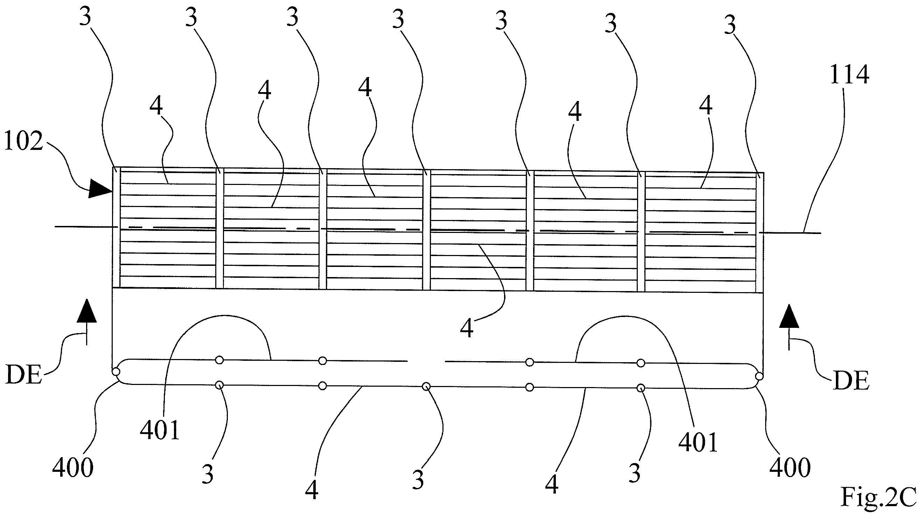

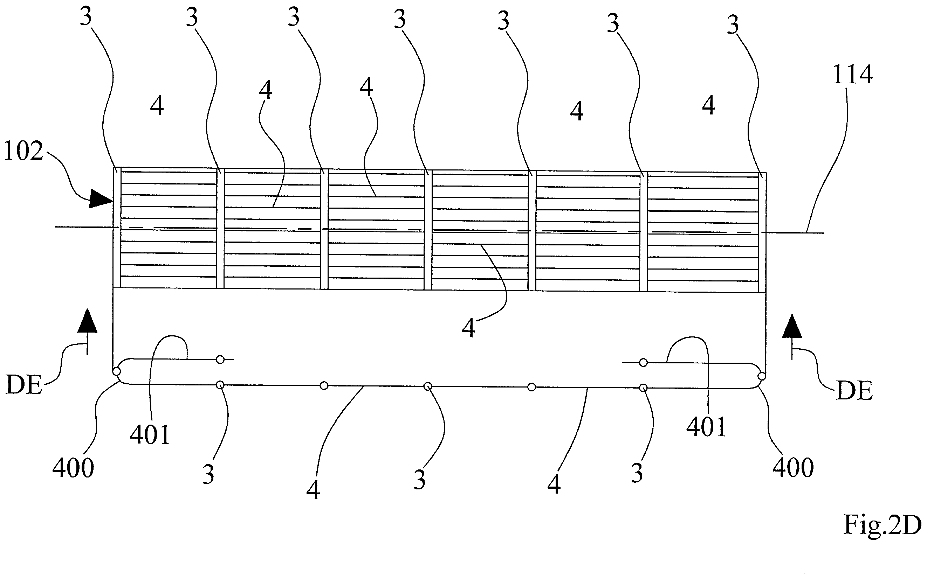

It should be noted that in an alternative embodiment illustrated in figures 2C-2E a step of folding can be included, according to fold lines that are parallel to the first longitudinal elements, before performing the step of winding the roll. In particular, with reference to figure 2C, it can be observed that lateral portions of the flat semi-finished workpiece, exiting from the stretching station 305, are folded along respective fold lines 400 so as to form longitudinal flaps 401 arranged superposing and parallel to the central part of the net workpiece. With reference to figure 2D, it can be observed that lateral portions of smaller size with respect to the example of figure 2C are folded along respective fold lines 400 such as to form longitudinal flaps 401 that are arranged superposed and parallel to the central part of the net semi-finished workpiece.

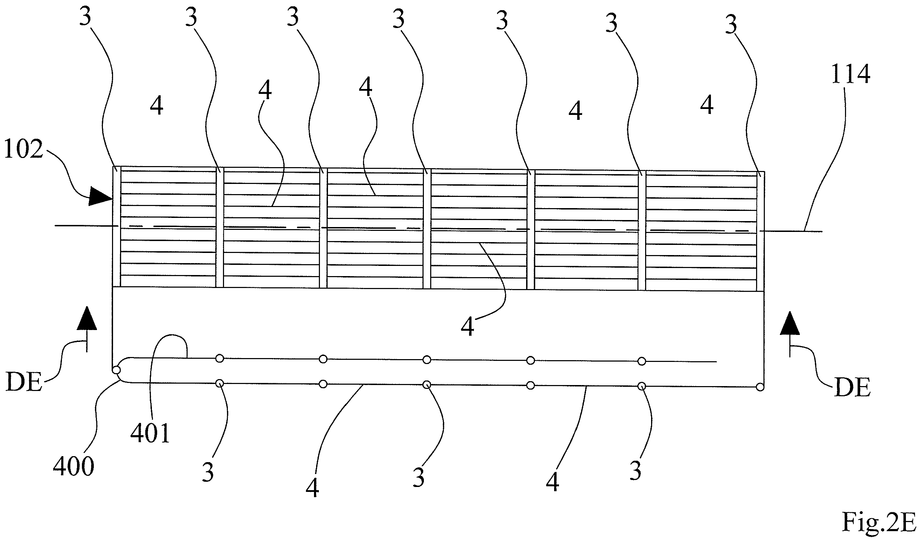

With reference to figure 2E, the semi-finished workpiece exiting the stretching station is folded on itself along a substantially median fold line 400 such as to form a semi-finished workpiece having two superposed on one another.

The above-described steps illustrated in figures 2C-2E enable the transversal dimensions of the roll to be reduced during the formation step, without damaging it, thanks to the flexibility of the second elements. In the case of very thin and flexible second elements, multiple folds can be made, creating structures with 3 or more superposed layers, prior to forming the roll.

In a further aspect, after the stretching along the second elements, the net structure 2 can be joined to a bordering element 24a having a laminar structure (for example a reticular film, a textile layer, a non-woven textile layer) defining passages having a smaller area than that of the meshes of the structure 2. The laminar bordering element can for example be hot-joined or glued to a surface of the net structure itself, before the structure is wound in a roll (and if there is a step of longitudinal folding, before it). As will better emerge herein below, the bordering element 24a can be used to define a support element 24.

### Applications

By unrolling the rolled product a grid reinforcing element is obtained for reinforcing, usable for gradients, barriers and "green" walls, either in blocks, or alternatively a grid element is provided for stabilizing, usable for roads, car parks and railway beds; or a grid element for containing, usable for realizing containing structures such as columns or mattresses.

### 1. VERTICAL POLE

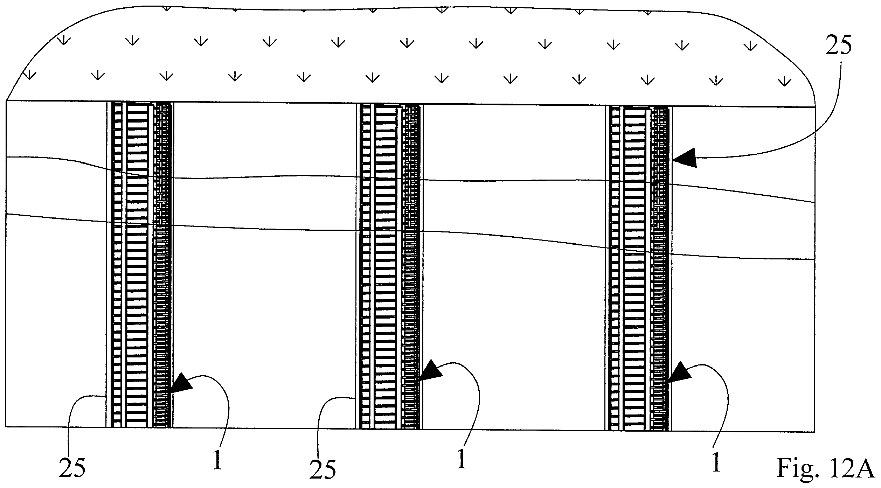

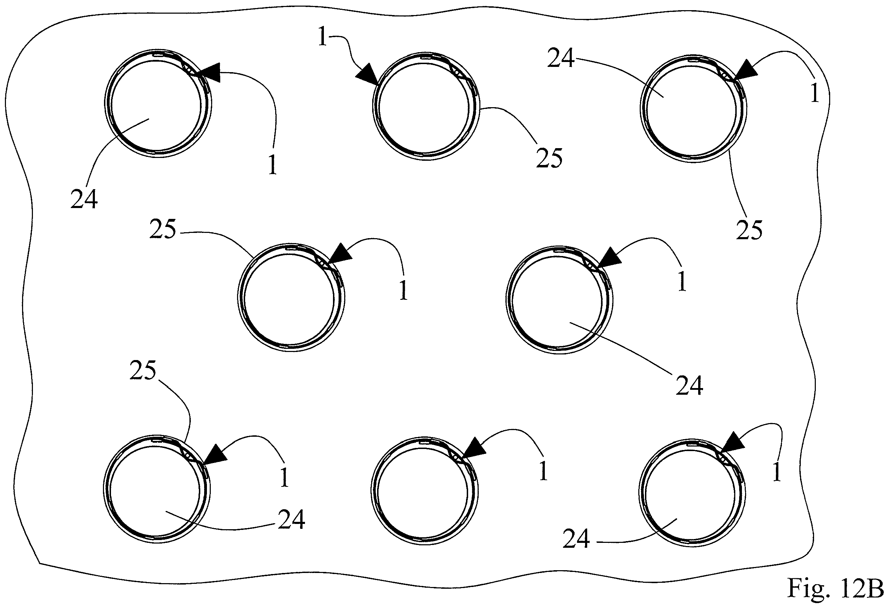

An example of application is shown in figures 12A and 12B in which a plurality of reinforcing elements are positioned in respective vertical and substantially cylindrical seating 25 afforded in a portion of ground to be consolidated and stabilized, thus forming structures similar to foundation piles.

In the accompanying figures two different configurations are shown in which the net structure of the reinforcing element 1 can be installed, in particular defined as the first and second working condition.

With reference to figures 6 to 11, the net structure 2 obtained by unrolling the rolled article 102 along the first elements or bars 3 is arranged along an arched profile of the second elements (i.e. with the second elements arranged in arcs or substantially parallel curved lines) and has a radially external surface 11 and a radially internal surface 12 opposite one another.

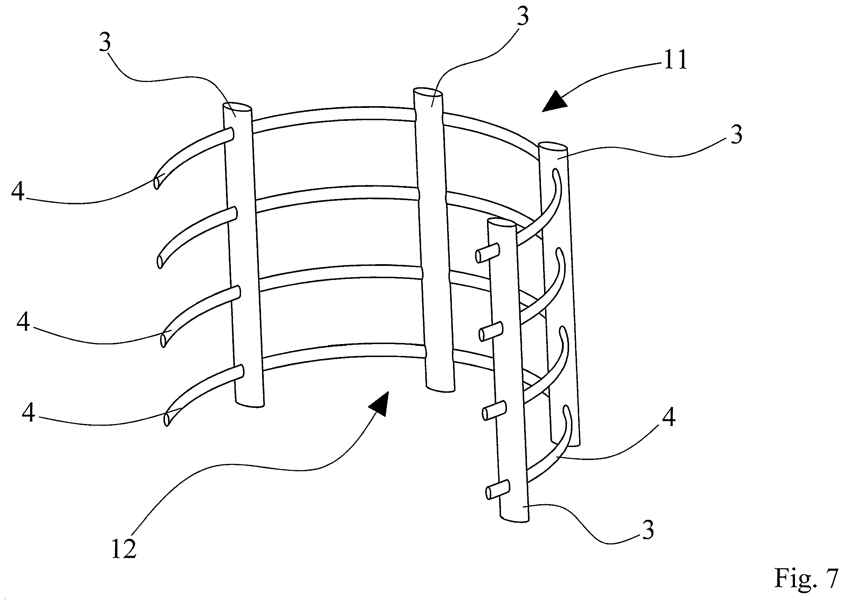

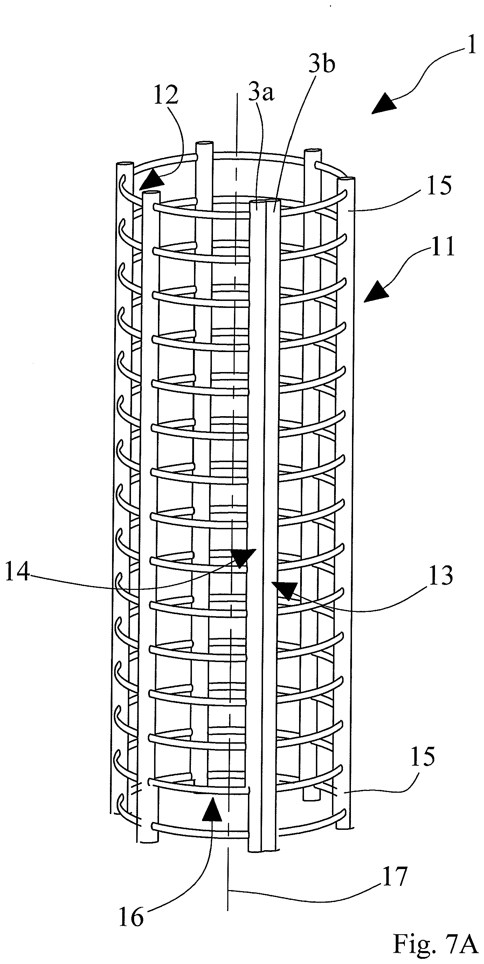

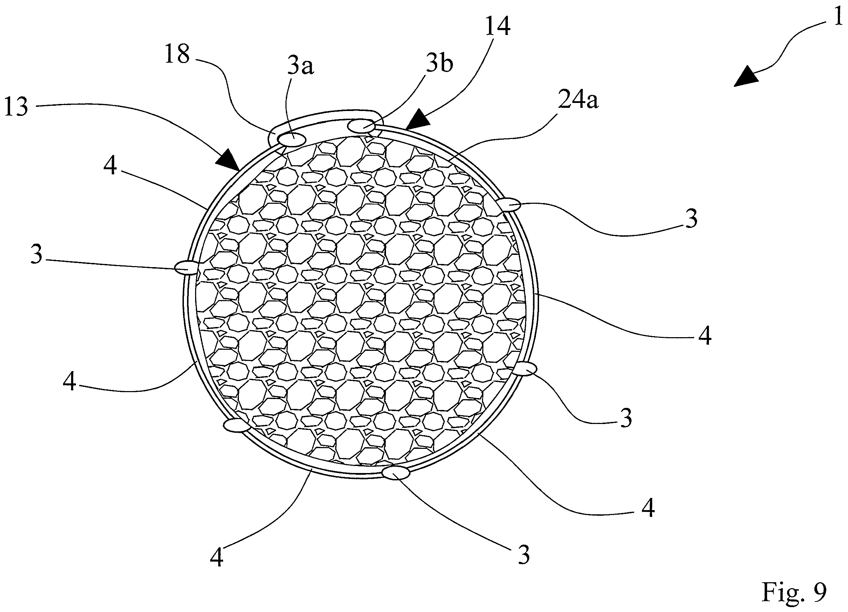

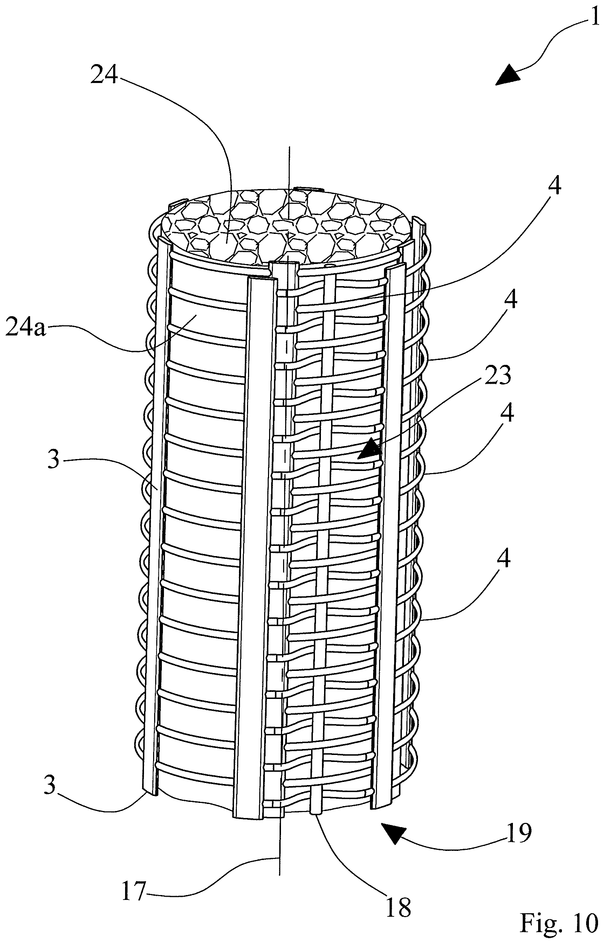

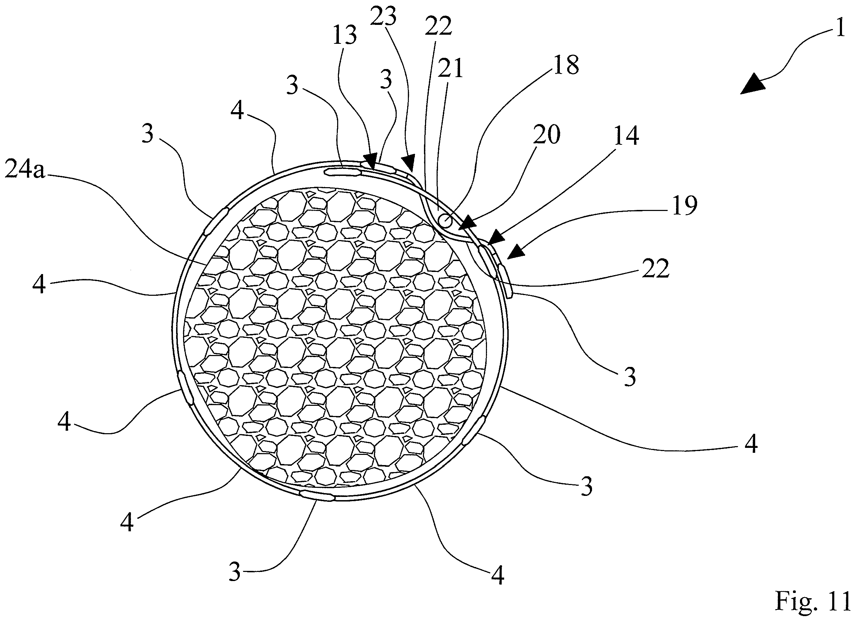

The net structure is longitudinally delimited by respective head portions 15 while circumferentially the net structure 2 is delimited by a first and a second longitudinal flap 13, 14 that can be directly adjacent (figure 9) or at least partially overlapping (figures 10 and 11) . In the first working condition, shown in figures 7 to 9, the second elements 4 are arranged in a substantially arched conformation to form a longitudinal seating 16 having an axis of extension 17 parallel to the first elements 3 of the net structure 2. In the example of figure 9, the net structure 2 of the reinforcing element 1 in the first working condition 9 has, according to a section with a plane substantially normal to the axis 17 and passing through the second elements 4, a substantially circular shape in which the flaps 13 and 14 and in particular the first end elements are mutually facing and substantially in contact with one another.

Alternatively, this shape can also have other conformations depending on needs: for example, substantially polygonal, elliptical, circular arched or elliptically arched.

To maintain the stable working condition shown in figure 9 elements can be provided for the radial stop 18, for example clips or straps or shaped plates or elements of any other nature that are applied at one or more points along the development of the first two elements 3a and 3b and are able to keep them in contact or at a predetermined distance.

As for the second working condition, visible in figures 10 and 11, the net structure 2 is wound at least partially upon itself so that the flaps 13, 14 form a longitudinal overlapping area 19. In the second working condition blocking is ensured by the cooperation between a predetermined number of superposed second elements with one or more blocking elements 18.

In closer detail, the second working condition can be seen in figure 11, where the overlapping area 19 comprises a plurality of slots 20 which form passage openings 21 bounded by tracts 22 of second elements 4 of mutually overlapping flaps 13 and 14. The slots 20 are aligned in a parallel direction to the first elements, forming a coupling zone 23. Although the accompanying figures show only one coupling area 23 defined by a plurality of slots 20 aligned with each other, there can be a presence of multiple coupling zones 23, circumferentially offset and providing greater radial blocking of the net structure 2. The blocking element 18 is inserted through the slots so as to cooperate with portions of the second elements of the two overlapping flaps 13 and 14. In practice, the blocking element may comprise a cylindrical body or bar, as shown in figure 10. As mentioned two or more blocking elements consecutive to one another along the longitudinal development of the reinforcing element 1 can be provided.

In the second working condition, the structure 2 in a section plane perpendicular to the axis 17 is for example configured in a substantially circular profile (figure 11). In a further configuration, the profile can be substantially polygonal, elliptical, circular arched or elliptically arched.

From a dimensional point of view, the reinforcing element 1 has a length in the direction of the development axis 17 of greater than 3 metres. For example, the reinforcing element while remaining a monolithic body may extend along the axis 17 by 5, 10, 20 or more metres according to requirements without giving rise to constructional complications. The circumferential extension is given by the length of each of the second elements 4, which for example can be from 2 to 6 metres.

The reinforcing element can optionally house a supporting element 24, arranged in said seating 16 and considerably consolidating the soil. According to different applications the support element 24 can be a container, such as a tubular net structure, partially or completely filled with a filling material which can be an aggregate and/or cement.

From a point of view of implementation, the roll of product 102 is first unwound along the prevalent development direction of the first elements, and then shaped so as to define the longitudinal seating 16. In the meantime, or previously, housing cavities 25 have been made in a terrain to be consolidated. The size, depth and distribution of these housings depends on the type of soil to consolidate. The reinforcing element 1 shaped as described (see figures 9 and 11) is inserted within each housing cavity 25 and the reinforcing element can be filled with filler material. Filler material or concrete can for example be inserted in the support element, or a combination of concrete materials and aggregate materials. Then a bordering element 24a can be inserted in the reinforcing element 1, which bordering element can be fillable with a filler material such as gravel, sand and/or concrete such as to define a support element 24. The bordering element 14a also exhibits a net structure (for example it comprises a tube of textile or a net bag or a laminar element fixed to the net structure at point of production) but having meshes of considerable smaller dimensions in comparison to those of the structure 2. Before or after insertion of the bordering element there is the circumferential blocking of the element 1 with one or more blocking elements 18 such that the element 1 can guarantee good radial containing performance and thus actively support the filler material.

Note that it is also possible to use the reinforcing element 1 alone, i.e. without the internal supporting element 24. In this case, once the holes have been bored in the ground to be consolidated the reinforcing element is inserted, which can for example be wound on itself in the first or second working condition described above and blocked circumferentially with the aid of one or more blocking elements 18.

### 2. MARINE MATTRESSES

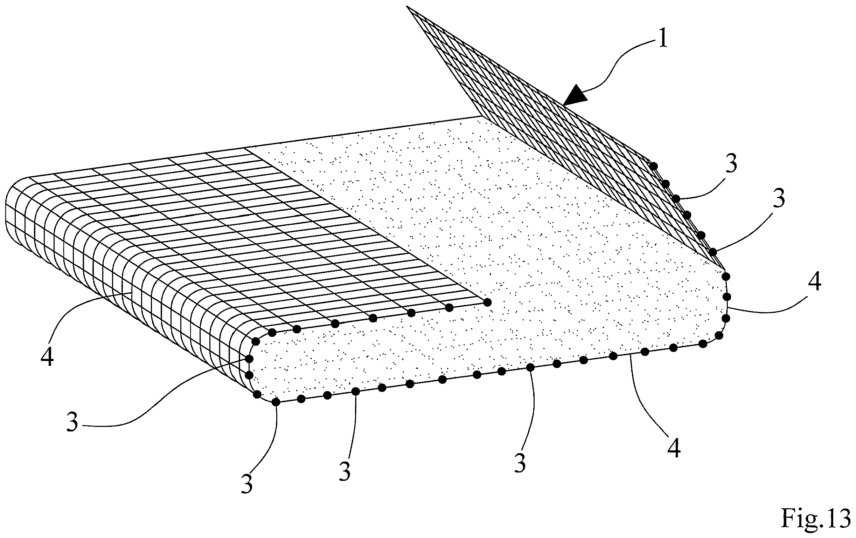

A further use of the reinforcing element configured as illustrated in figures 7-11, 13 and 14 is to arrange the reinforcing element horizontally such as to constitute a containing structure delimited by respective head portions 15 while circumferentially the net structure 2 is delimited by a first and a second longitudinal flap 13, 14 which are partially superposing (similar to that described with reference to figures 10 and 11).

In this case too a bordering element 24 can be used, of the type described with reference to the application for foundation poles. The area of overlap comprises a plurality of slots 20 which form passage openings 21 bounded by sections of the second elements 4 of mutually superposing flaps 13 and 14. The slots 20 are aligned in a parallel direction to the first elements, forming a coupling zone 23. Although the accompanying figures show only one coupling zone defined by a plurality of slots 20 aligned with each other, there could be multiple coupling areas circumferentially offset and usable for providing greater radial locking of the net structure 2. The blocking element 18 is inserted through the slots so as to cooperate with portions of the second elements of the two overlapping flaps 13 and 14. In practice, the blocking element may comprise a rod-shaped body. As mentioned, two or more blocking elements can be provided, consecutive to one another along the longitudinal development of the reinforcing element 1.

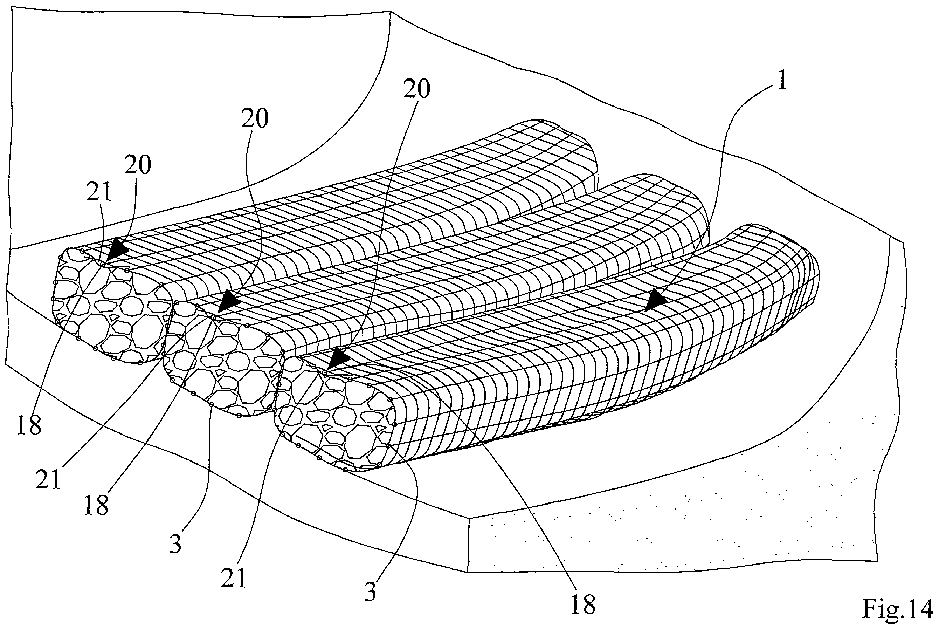

These reinforcement elements are used, for example along the banks of rivers or on a seabed, as shown in figure 14. In this case the reinforcing element is filled with gravel or stones and is stretched substantially horizontally. A plurality of reinforcing elements in general are arranged with circular profile closed on itself and mutually flanked to form a structure having a function of protection and anti-erosion.

### 3. CONSOLIDATION and FRONTAL REINFORCEMENT AND THE LIKE

With reference now to the accompanying figures from 15 to 20, the reinforcing element 1 is used for the consolidation and strengthening of fronts, slopes, embankments, green walls, natural or artificial walls, block walls, valleys, rock protection, noise barriers and the like.

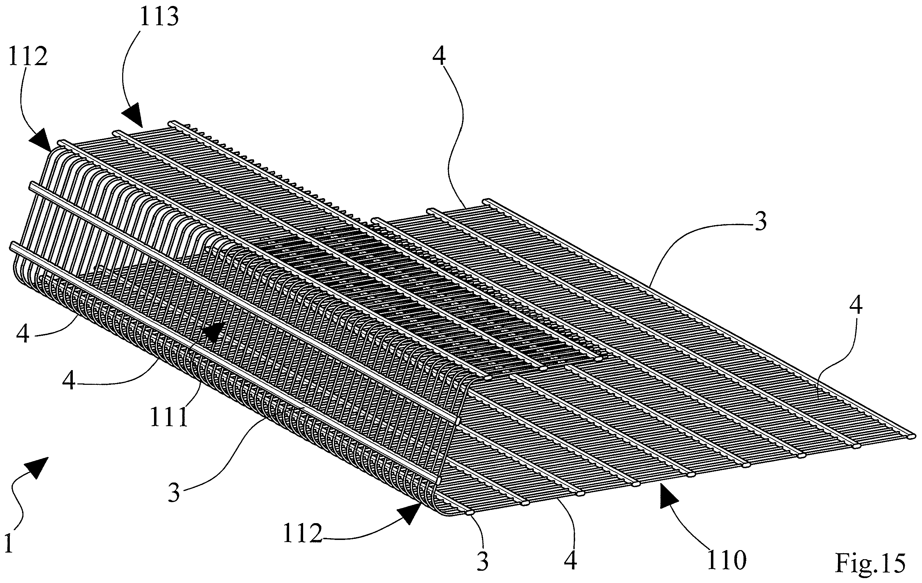

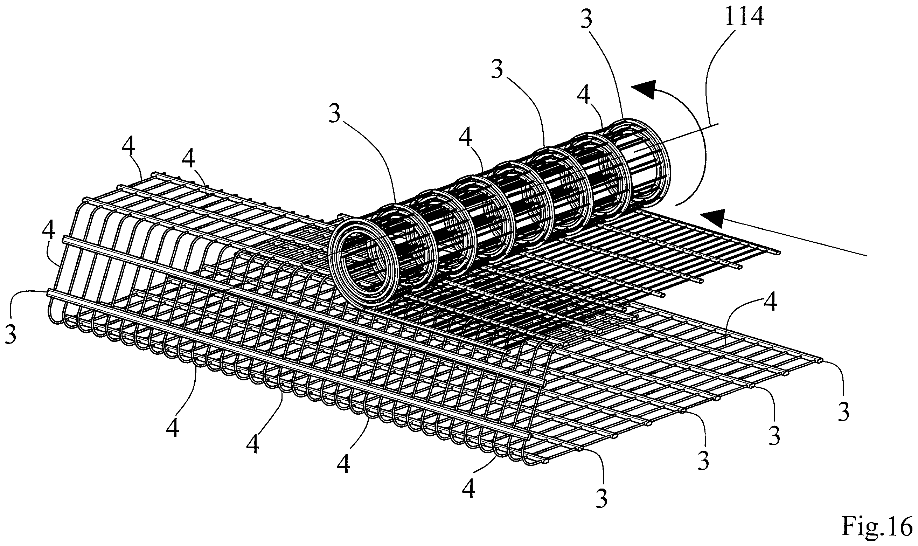

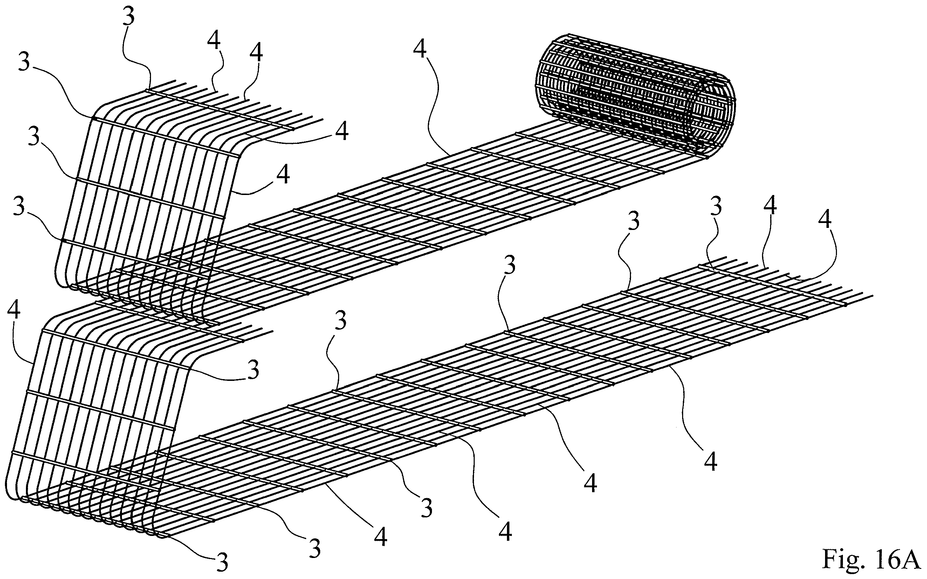

As shown in figure 15 and figure 16, the reinforcing element 1 exhibits a three-dimensional configuration (i.e. not flat) which in a view transversal to the first elements exhibits an open-profile shape having at least two tracts 110 and 111 arranged transversally to one another. For example the open-profile shape comprises a first and a second tract 110 and 113, substantially straight and optionally substantially parallel to one another, connected by at least an intermediate tract 111 transversal to the first and second tracts. The intermediate tract is joined to the straight tracts via substantially arched tracts 112, in particular an arc of a circle, interposed between the straight tracts and the intermediate tract.

Passing on to detail the process for consolidation and reinforcement of the ground shown in figures 15-20, the process comprises the formation of a containing structure that can frontally support a gradient or a slope prone to landslides.

The process comprises the following steps.

A first step of the process consists in preparing the soil to be consolidated or the initial surface of the structure being formed. This step for example comprises realizing a laying plane where the product in roll form 102 can be unrolled.

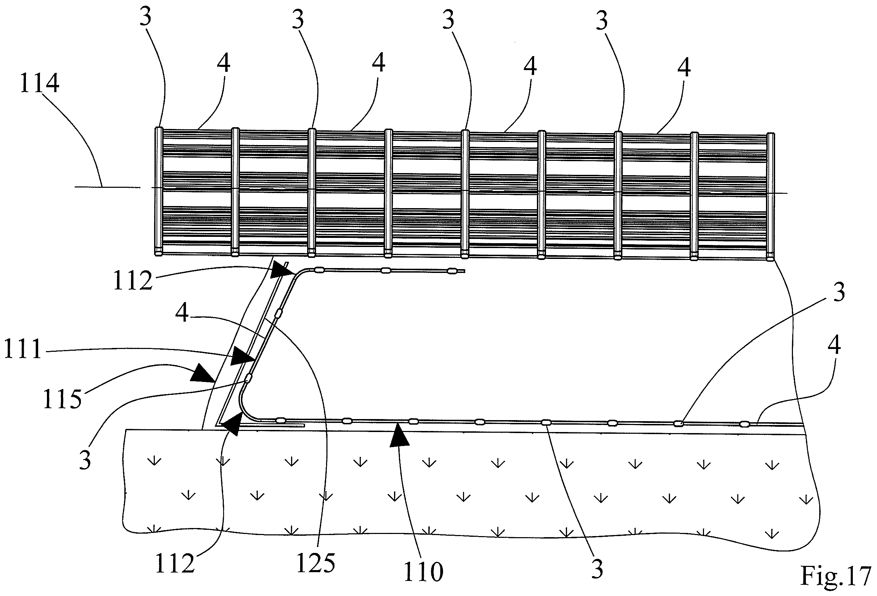

A second step consists in arranging a product in roll form 102 on a tract of the terrain (figures 16 and 17). The product is arranged with its winding axis 114 transversal to the facade of the area 115 to be consolidated or of the containing structure under realization. In the figures, the axis of the rolled product is horizontal and arranged so that during the process of unwinding the first elements are arranged parallel to the horizontal extension direction of the area 115 and the second elements are arranged transversally to the horizontal extension direction of the area (i.e. directed internally of the slope or structure). In practice, in the example shown in figure 16 the first elements 3 are substantially horizontal such that following the unwinding of the product 102 a significant horizontal tract of the containing structure is covered. The second elements 4 are oriented perpendicularly to the first elements and arranged in an open profile such as the one shown in figure 15.

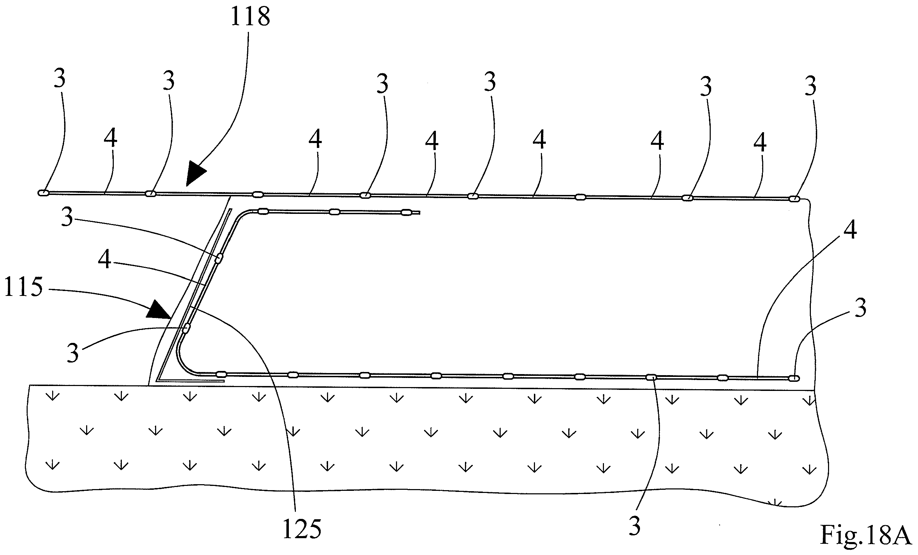

A third step (figure 18A) consists in unrolling the product 102 along the prevalent development direction of the first elements 3 such as to obtain a reinforcing element 1 arranged with the first elements 3 horizontal and oriented along the area 115 and the second elements 4 oriented transversally to the horizontal development direction of the first elements and at least partly oriented transversally to the surface of the area 115. This is exactly the opposite of what has been done traditionally (figure 16A).

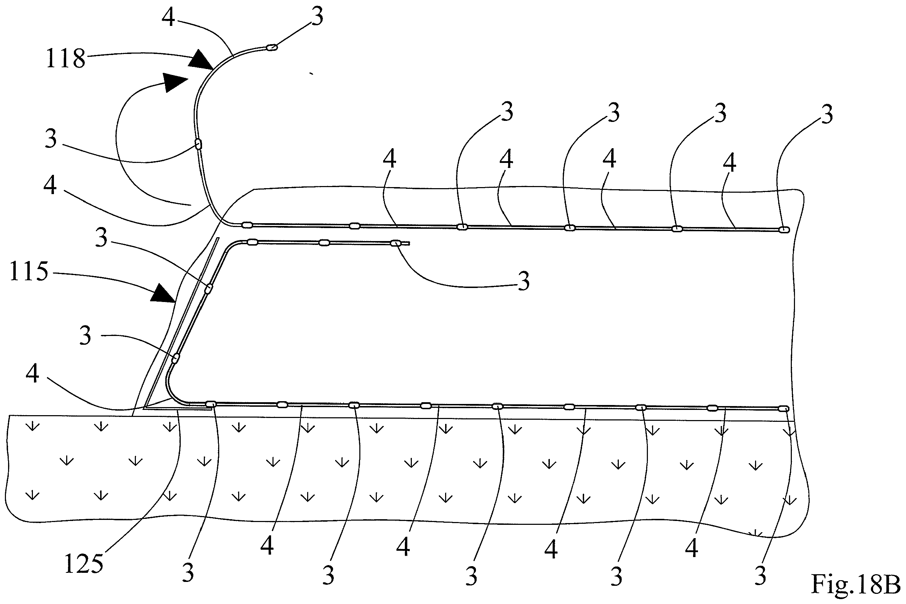

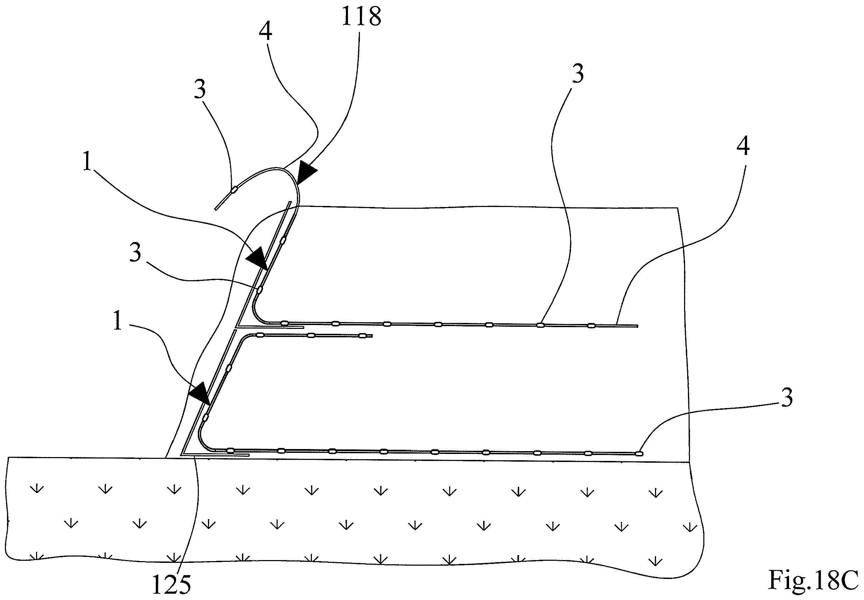

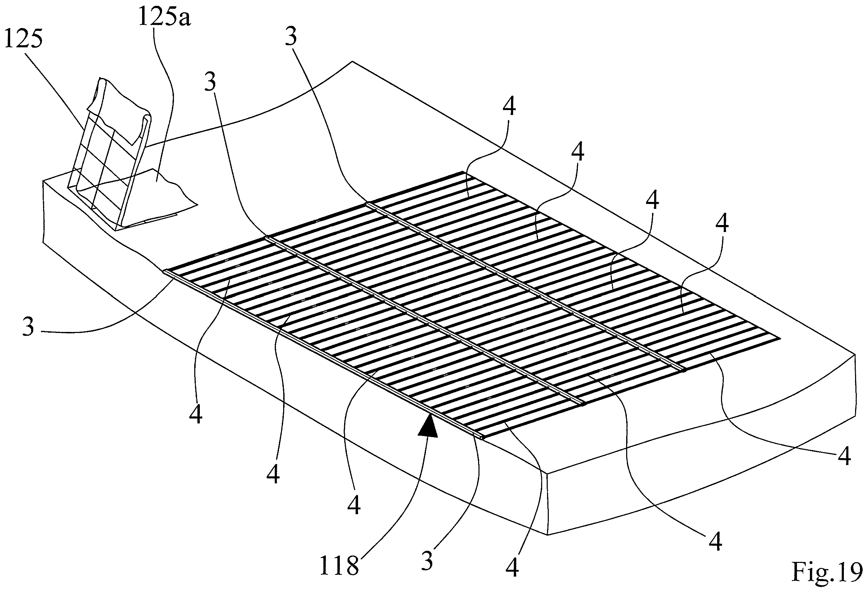

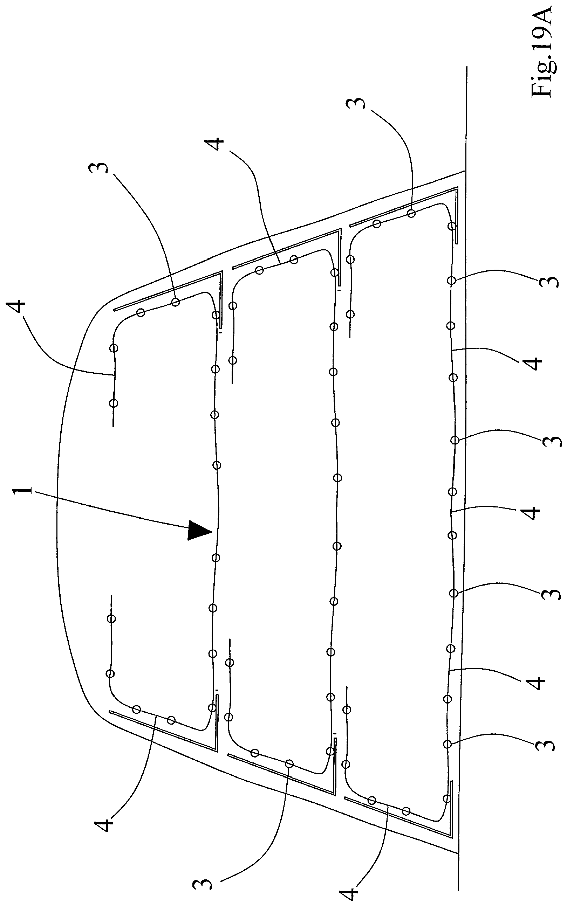

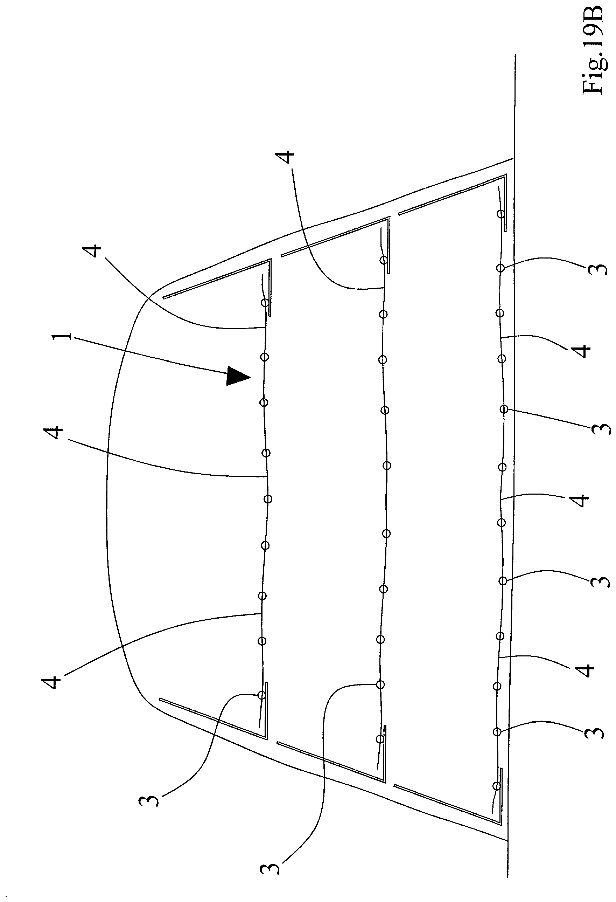

Following the unwinding of the rolled product, possible a little stabilizing material is laid, with the fold of a free longitudinal edge 188 of the net structure 2 facing upwards (figure 18B). Then positioning of formwork 125 is performed, with an associated containing net 125a: figure 19 illustrates a formwork; obviously a plurality of formworks can be arranged along the area, for example made of iron, to appropriately configure the area 115 (figure 18C).

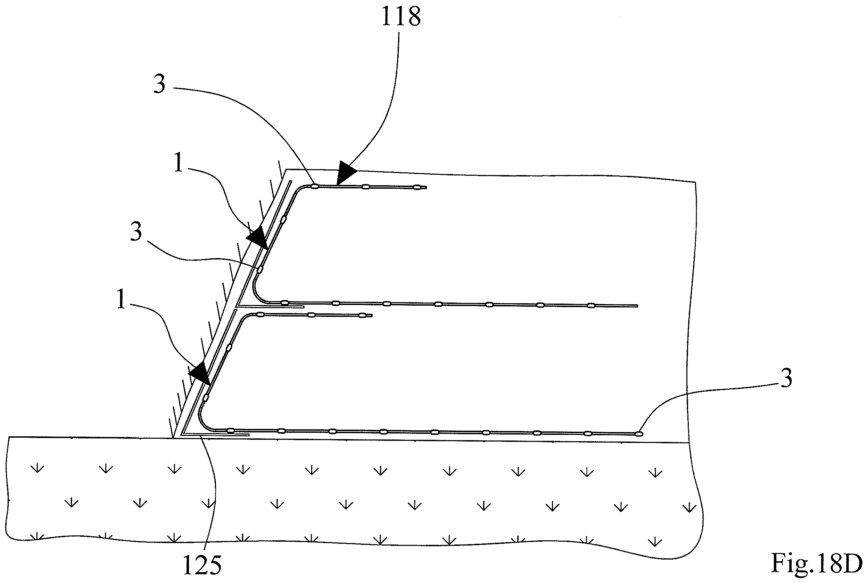

Then further filler material is deposited, arranged on the horizontal portion of the reinforcing element over a height that is substantially equal to the frontal formwork (figure 18D), thus forming one or more reinforced layers. The longitudinal edges extend parallel to the first elements of the net structure. In the described example, at least one of the longitudinal edges 118 is folded upwards to wrap the filler material: figures 18A-18D evidence the longitudinal edges 118, respectively, before and during the winding phase of the reinforcing element.

Alternatively the product roll can be unwound as shown in figure 19, i.e. with a longitudinal edge 118 substantially flush with the area to be covered. In this case, the net structure is flat and has the first elements parallel to the area and the second transversal elements and substantially coplanar to the first elements. Even in the case of figure 19 as in that of figures 18A-18D it is possible to realize multi-layer reinforced structures where the net structure of each layer is parallel to that of the adjacent layers. Finally, in the case of figure 19 too it is possible to use frontal formworks 125 which allow frontal containing and profile definition of the area under formation.

Although in figures 18A-18D in figure 19 and reference is made to reinforcing structures of an area, the solutions described can also be applied on ridges or embankments or banks with two opposite sides as shown in figures 19A and 19B.

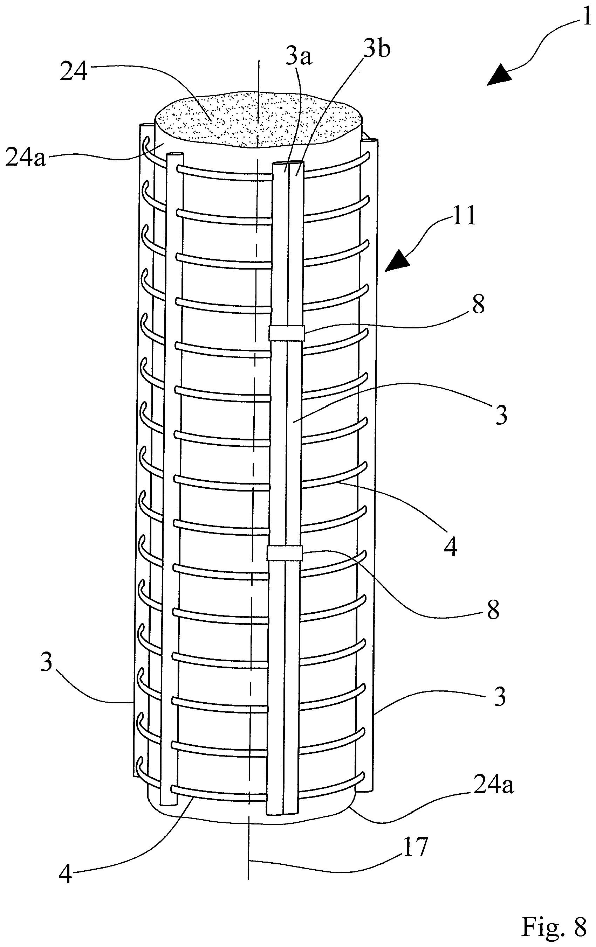

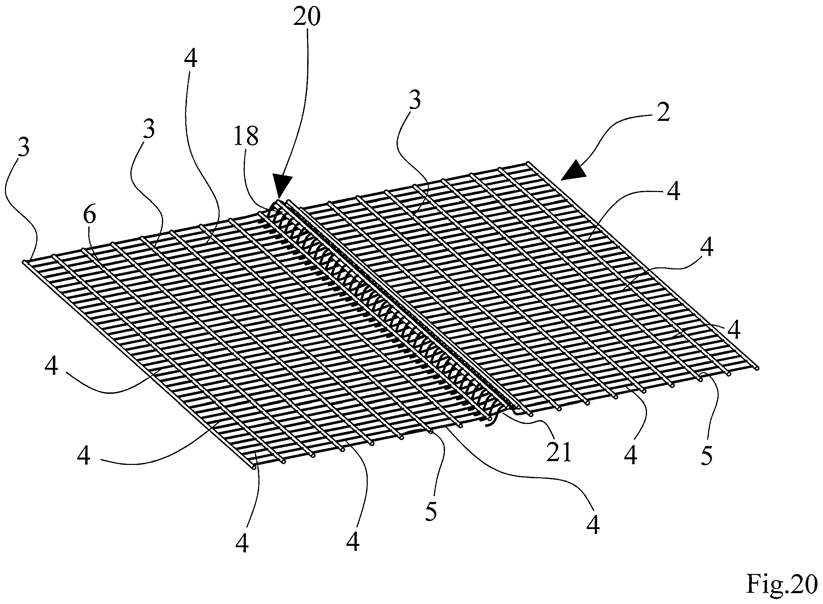

Lastly, figure 20 shows how the reinforcing element can be superficially widened thanks to the joinability of two rolls laid side by side. The joint can be effectively obtained by joining two longitudinal edges to one another and using the joins as shown for example in figure 8 (clips or the like) or by superposing the longitudinal edges of two reinforcing elements side by side and adopting the connecting means (18, 20, 21) illustrated in figure 6C.

Figures 19A and 19B illustrate a further application example on a bank. The product roll 102 is unwound along the first elements 3 so as to form a reinforcing element 1 the first elements 3 of which are arranged parallel to the surfaces of the bank and the second elements 4 of which are perpendicular thereto. In the mentioned figures, the reinforcing element 1 has a planar structure (figure 19B) or a three-dimensional structure with an open profile having a straight tract and two edges facing upwards or downwards (figure 19A). In addition, a plurality of reinforcing elements can be positioned in partial or total superposing relationship.

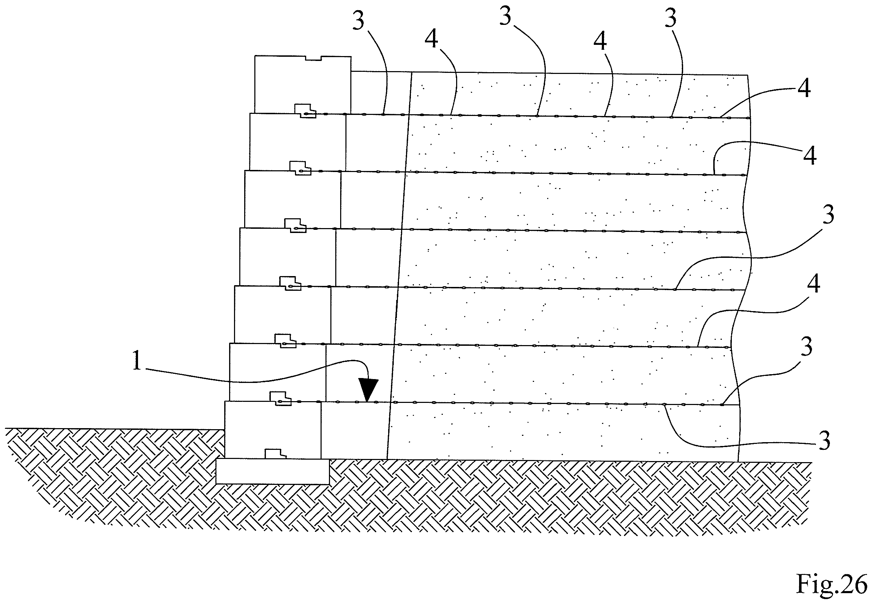

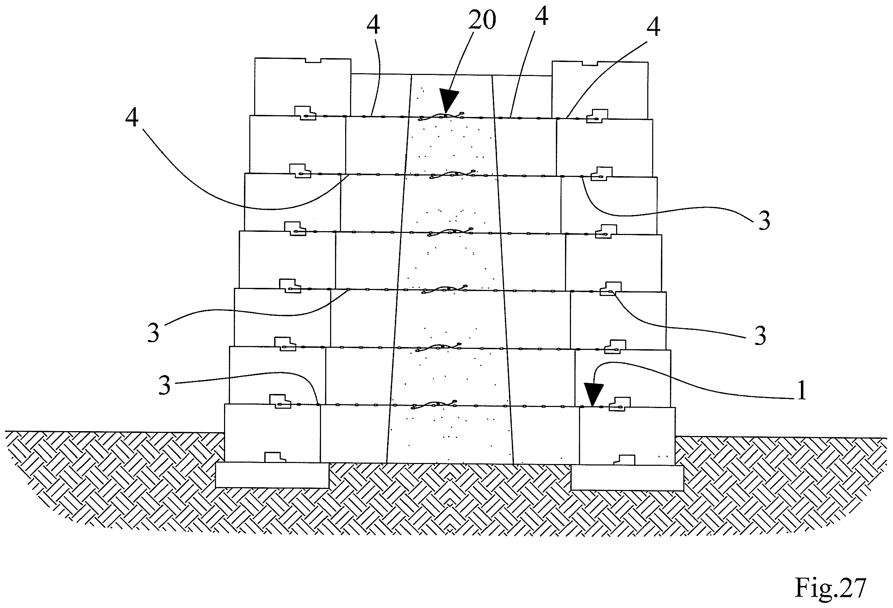

With reference now to figures 26 and 27, the reinforcing element 1 is used for the consolidation and reinforcement of artificial walls, block walls and the like. In the specific application of the product of figure 26 and figure 27 the product roll 102 is unwound along the first elements 3 so as to form a reinforcing element 1 the first elements 3 of which are arranged parallel to the surface (figure 26) or to the opposite sides of the wall (figure 27) and the second elements 4 of which are perpendicular thereto. In the above-mentioned figures the reinforcing element 1 has a planar structure. In addition, a plurality of reinforcing elements can be positioned in partial or total superposing relationship. The longitudinal edge of each reinforcing member engages a groove arranged on the upper surface of blocks defining the front face or faces of the wall. In the case of figure 27 both opposite longitudinal edges, which are defined by a respective first element, engage respective slots arranged on the blocks forming the two opposite sides of the wall. Furthermore, since the blocks and the reinforcing elements are arranged in superposed layers, the blocks of a subsequent layer close and block the longitudinal edges against the adjacent blocks of the previous layer. In this way a correct positioning and anchoring of the reinforcement element is ensured.

### 4. CONSOLIDATION of ROADS and RAILWAY BEDS

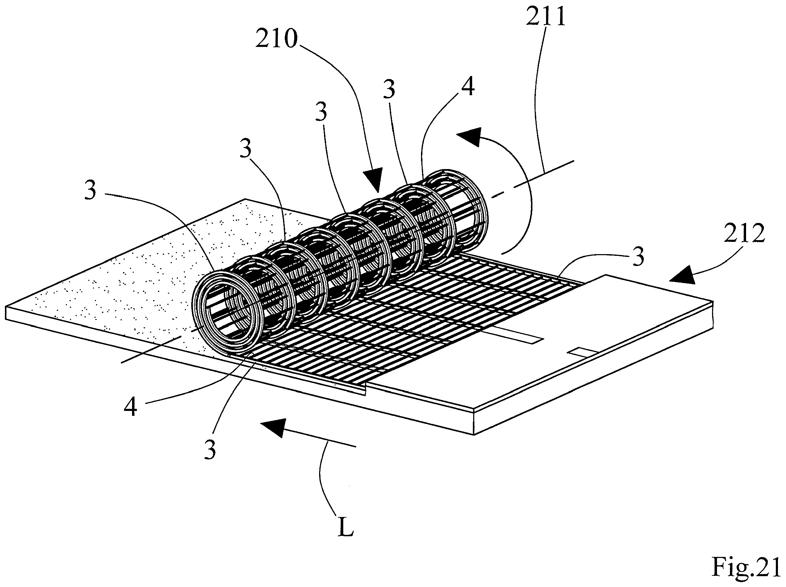

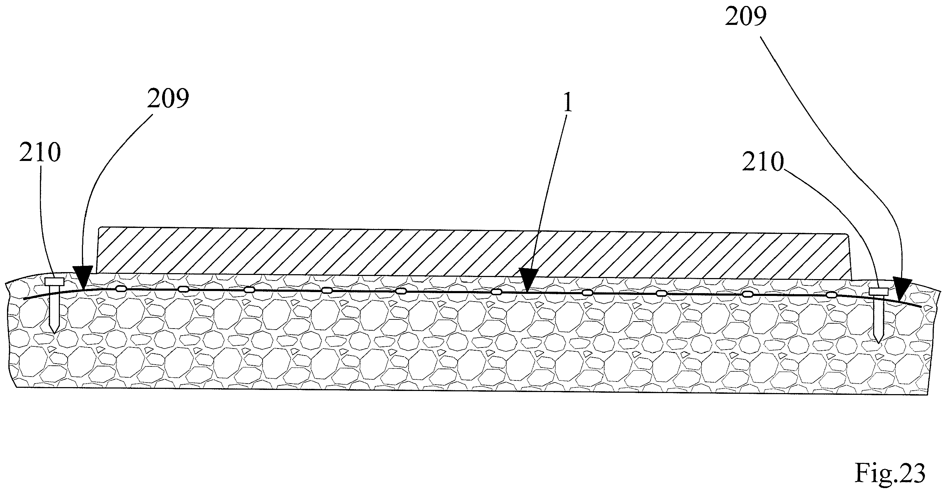

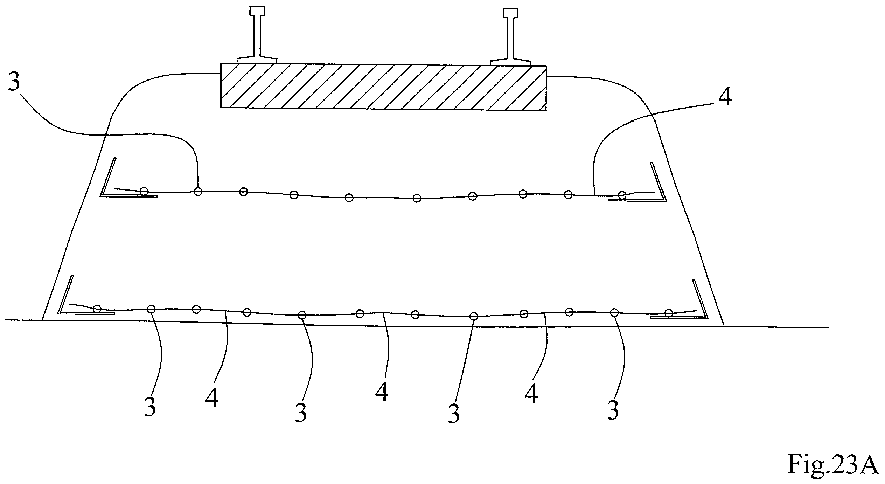

The reinforcing element 1 can also be used for the consolidation of road beds (figures 21-23) parking or storage areas and/or railway beds (figures 23A, 24 and 25).

The product in roll form 102 is unwound along the prevailing direction of the road or railway ballast in order to provide the reinforcing element 1 with the first elements aligned to the direction of travel of the road or rail.

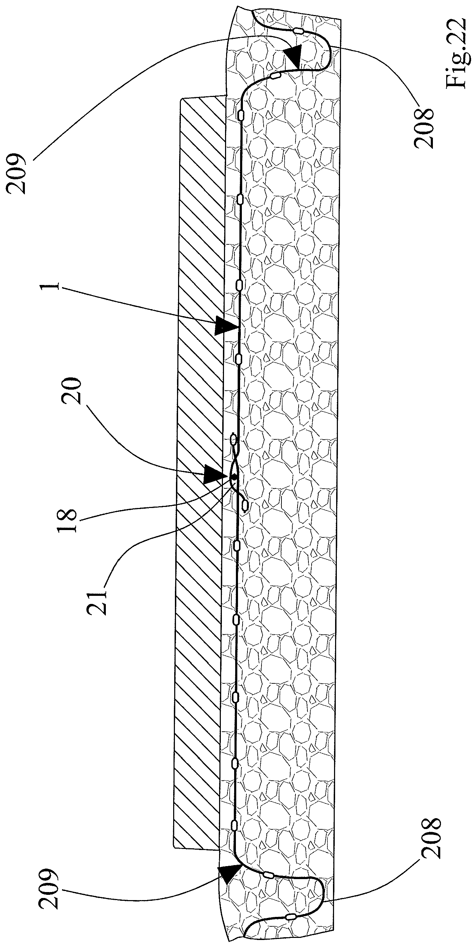

Also in these applications the reinforcing element 1 can be shaped in a flat configuration (figure 23 and Figure 23A) or three-dimensional (i.e. not coplanar with portions such as shown in figures 22, 24 and 25).

In a case of flat configuration, the profile of the reinforcing element is virtually rectilinear and mainly used for the consolidation of road or parking areas, although the use thereof for railway bed ballast is not excluded. The longitudinal edges 209 of the reinforcing element can be blocked to the ground with the aid of pegs 210 for increasing the resistance and lift of the reinforcing element.

In the case of three-dimensional configuration for use on road surfaces, the profile of the reinforcing element 1 has, in a transversal view to the first elements, a shape with open profile having a substantially straight central portion, to the opposite transversal ends of which corrugated sections 208 defining longitudinal trenches 209 are joined (figure 22) where the filling material can build up and form an effective stop transversally of the prevalent development direction of the carriageway.

In this case too, a plurality of reinforcing elements can be joined, as shown in figure 20, to cover the area of interest in the transversal direction and therefore cover a greater surface area.

In a detail of the laying operation, the reinforcing element 1 used for the consolidation of road surfaces is formed by unrolling the product 102 positioned with its axis transversal to the prevalent development direction L of the carriageway 212 or the road surface on which the roadway will defined. Based on the width of the roadway two or more reinforcing elements can be laid side by side and joined in the transversal direction to the prevalent development direction of the carriageway.

Although it is not possible to realize a product roll 102 that can cover the entire length of the road or carriageway, the invention offers the possibility of minimizing the number of transversal connections between longitudinally consecutive elements 1 and to arrange the first and second elements exactly according to the best possible orientation, the second elements 4 being arranged transversally to the prevalent development direction L of the road (i.e. able to make an effective containment transverse) and the first elements being able to offer an effective anchoring to the soil over the entire length of the element 1.

After laying, the adjacent reinforcing elements can be connected to one another by means of blocking elements.

In this particular case, to connect adjacent reinforcement elements along the development of the carriageway, metal or plastic bars are used. In particular the ends of adjacent reinforcing elements are superposed so that the second elements form the slots (the principle is the same as described for the examples of figures 8 and 10 and in the detail of figure 6C). The bars are inserted into the slots to keep the reinforcing elements in position.

After the relative positioning and possible anchoring of the various reinforcing elements, aggregate filler material is typically laid (for example comprising gravel, stones, sand) which when deposited at the meshes stably anchors each reinforcing element to the ground. Thus one or more surface coverings can be deposited for defining the true and proper road surface. In the case of consolidation of railway ballast the reinforcing element can for example be prepared as described above with reference to roadways (refer to figure 22 and figure 23 with the difference that in place of the road surface, there may be one or more railroad tracks, or see figure 23A).

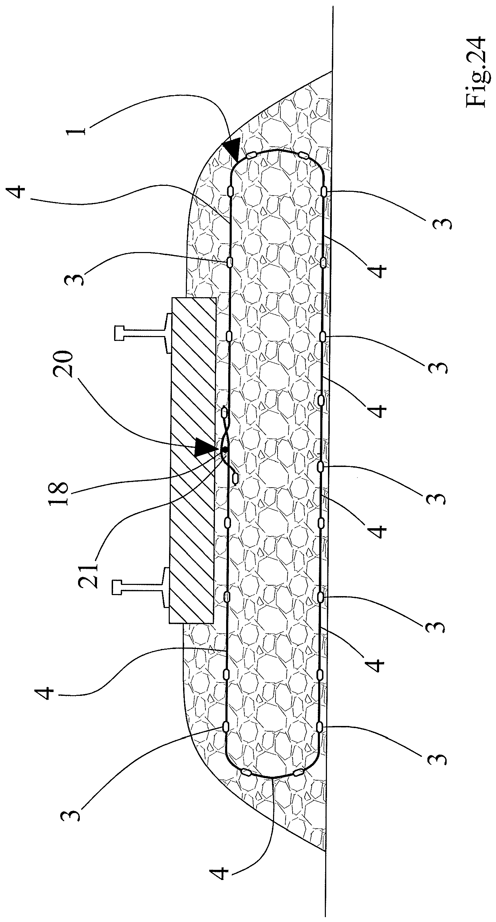

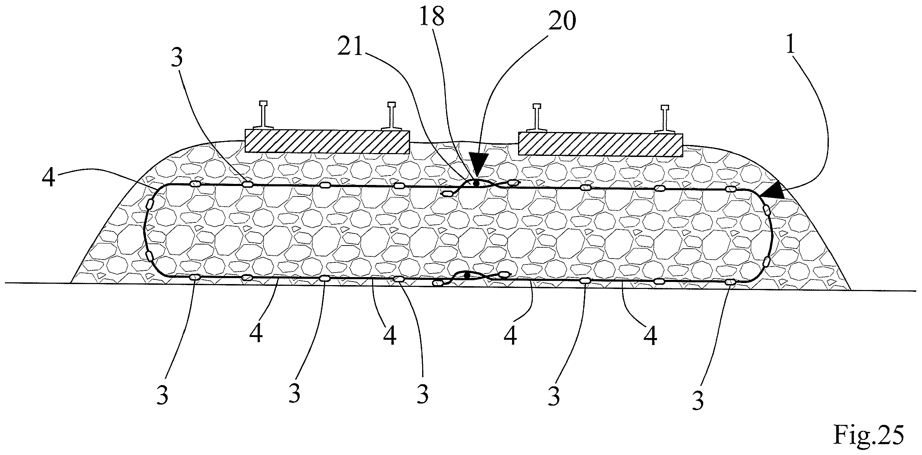

In a further aspect of the invention it is however also possible to realize reinforced rail bedding of the type illustrated in figures 24 and 25. In these figures, after the product roll is unwound along the first elements and laid on a first layer of gravel or other aggregate material forming the base of the railway ballast, the net structure thus obtained is wound in the direction of the second elements, so as to form a net structure with a looped transversal profile (figure 24).

Alternatively 2 or more reinforcing elements are connected along the respective longitudinal edges (e.g. using the techniques illustrated in figure 6C) such as to define a looped net structure of larger dimensions, for example to reinforce support ballast of two or more railway lines (figure 25).

The lattice structure obtained has, as shown in figures 24 and 25, a looped transversal profile having a horizontal dimension that is greater than the vertical (for example having an elliptical or rectangular shape with rounded edges) so as to suitably reinforce a railway ballast having an isosceles trapezoid transversal shape with a substantially smaller height than the dimensions of the base.

### The invention attained one or more of the above-specified aims.

Thanks to the invention a series of two or more reinforcing elements can be used in numerous applications, facilitating the anchoring and minimizing the installing costs.

The reinforcing element obtained by unrolling the product in roll form can further be joined by interconnection along the whole length of the longitudinal sides thereof to further reinforcing elements such as to construct a single reinforcing and stabilizing surface of considerable dimensions.

The reinforcing element of the invention can also be anchored along all sides thereof in order to fully exploit the resistance of the product in reinforcing and stabilizing.

With the invention, a structure rollable into a tubular shape can be realized, by joining the edges of the reinforcing element 1 along the direction of the first elements, as it is able to realize containing structures such as those described in the present invention. The invention especially offers the possibility of being folded and connected along the two flaps thereof with the aim of constituting a geotechnical structure able to contain and confine stones, grave and earth as required, by using a textile for containing.

Differently from the traditional single-stretched nets, the rolled product is wound along the first elements (or bars) which exhibit any extension, being orientated along the extrusion direction of the semi-finished workpiece or the advancement direction during the manufacturing of the semi-finished workpiece in sheet form.

Thanks to the production process of the invention, the distance between the first adjacent elements and the second adjacent elements can be varied.

Further, the first elements maintain a straight configuration that is very useful, as the elements must be arranged along the prevalent development direction of the structures to be consolidated or reinforced.

## Claims

1. A series comprising two or more reinforcing elements (1) for geo-technical applications each of a type comprising a monolithic net structure (2) made of a plastic material, having:
a plurality of first elements (3) distanced from one another and having an elongate conformation in a respective prevalent development direction,
a plurality of second elements (4) distanced from one another which develop substantially in a transversal direction to the first elements (3), the second elements (4) also having an elongate conformation according to a respective prevalent development direction,
the net structure (2) exhibiting a length, measured in a direction of the first elements (3), having a considerably greater extension than a width measured in a direction of the second elements (4),
following the formation of the net structure (2), the second elements (4) being stretched along the prevalent development direction thereof, giving the net structure (2) a width in a direction of the second elements (4) that is greater than 2 meters,
said first elements do not exhibit a stretching following formation thereof or exhibit a stretching ratio defined as a ratio between a final length of the first elements once the stretching has been carried out and an initial length of the first elements before a stretching action thereon, that is comprised between 1 and 1.5;
the reinforcing elements being transversally flanked and arranged longitudinally according to a direction parallel to a direction of the first elements, wherein the reinforcing elements (1) are connected by blocking elements (18) which constrain longitudinally flanked edges of adjacent reinforcing elements,
wherein the reinforcing elements are arranged such as to define an overlap zone (19) which comprises a plurality of slots (20) which form passage openings (21) delimited by segments (22) of the second elements (4) of mutually overlapping flaps (13, 14), the slots (20) being aligned in a direction parallel to the first elements, forming a coupling area (23), a blocking element (18), comprising a cylindrical body or a bar, being inserted through the slots such as to cooperate with portions of the second elements of the two overlapping flaps (13, 14).

2. Series of claim 1, wherein the reinforcing element (1) exhibits a length in a direction of the first elements (3) that is greater than 10 meters, the first elements (3) being at least twice as long, optionally ten times longer than the second elements (4).

3. Series of claim 1 or 2, wherein the area of a transversal section of the first elements is at least 5 times greater than an area of a transversal section of the second elements, wherein the first elements (3) and the second elements (4) exhibit a full transversal section,
wherein the first elements (3) exhibit, along a whole longitudinal development thereof, a transversal section having an area of greater than 20 mm², optionally greater than 30 mm² and
wherein the second elements (4) exhibit, along a whole longitudinal development thereof, a transversal section having an area of greater than 3mm², operationally greater than 4mm².

4. Series of any one of the preceding claims, wherein the first elements (3) are not stretched or if stretched are stretched less than the second elements, and wherein the second elements (4) are stretched along a prevalent development direction thereof following formation thereof and exhibit a structure having molecular chains orientated along the prevalent development direction of the second elements (4), molecular orientation in the structure of the second elements being more pronounced than molecular orientation in the structure of the first elements.

5. Series of any one of the preceding claims, wherein the net structure (2) exhibits a three-dimensional configuration having, in a transversal view to the first elements (3), a central part having a substantially straight profile and longitudinal edges (209) that are undulated or folded with respect to the central part.

6. Series of any one of the preceding claims, wherein the first elements (3) and the second elements (4) intersect at the nodes to form meshes, at least the second elements (4) exhibiting portions extending between consecutive nodes, each of the portions having terminal zones having a width, measured parallel to the first elements (3), that progressively decreases starting from a node in a direction of a median line of the portions and a central zone having a width that is substantially constant and less than a width of the terminal zones, and wherein the net structure (2) exhibits:
a specific weight of greater than 200 g per m², optionally between 200 and 1200 g per m²;
a specific resistance to traction, along the second elements, of greater than 20 KN/m, in particular comprised between 20 and 200 KN/m, optionally between 60 and 200 KN/m, the resistance being measured using the method set out in the description.

7. Series of any one of the preceding claims, wherein the reinforcing element has, joined on at least a side of the element, a laminar confining element, for example a plastic net or a textile, or a non-woven textile, having through-holes that are considerably smaller than the through-holes of the net structure.

## Patentansprüche

1. Reihe, umfassend zwei oder mehr Verstärkungselemente (1) für geotechnische Anwendungen, von welchen jedes von einer Art ist, welche eine aus einem Kunststoffmaterial hergestellte monolithische Netzstruktur (2) umfasst, welche aufweist:
eine Mehrzahl von ersten Elementen (3), welche voneinander beabstandet sind und in einer jeweiligen vorherrschenden Verlaufsrichtung eine längliche Gestalt aufweisen,
eine Mehrzahl voneinander beabstandeter zweiter Elemente (4), welche im Wesentlichen in einer zu den ersten Elementen (3) transversalen Richtung verlaufen, wobei die zweiten Elemente (4) gemäß einer jeweiligen vorherrschenden Verlaufsrichtung auch eine längliche Gestalt aufweisen,
wobei die Netzstruktur (2) eine in einer Richtung der ersten Elemente (3) gemessene Länge aufweist, welche eine beträchtlich größere Erstreckung als eine in einer Richtung der zweiten Elemente (4) gemessene Breite aufweist,
wobei die zweiten Elemente (4) der Bildung der Netzstruktur folgend entlang der vorherrschenden Verlaufsrichtung davon, der Netzstruktur (2) in einer Richtung der zweiten Elemente (4) eine Breite gebend, welche größer als 2 Meter ist, gedehnt sind,
wobei die ersten Elemente keine der Bildung davon folgende Dehnung aufweisen oder ein Dehnungsverhältnis aufweisen, welches als ein Verhältnis zwischen einer finalen Länge der ersten Elemente, sobald das Dehnen ausgeführt worden ist, und einer Anfangslänge der ersten Elemente vor einem Dehnungsvorgang daran definiert ist, welches zwischen 1 und 1,5 umfasst ist;
wobei die Verstärkungselemente transversal flankiert sind und gemäß einer zu einer Richtung der ersten Elemente parallelen Richtung longitudinal angeordnet sind, wobei die Verstärkungselemente (1) durch Blockierelemente (18) verbunden sind, welche longitudinal flankierte Ränder benachbarter Verstärkungselemente halten,
wobei die Verstärkungselemente derart angeordnet sind, dass sie einen Überlappungsbereich (19) definieren, welcher eine Mehrzahl von Schlitzen (20) umfasst, welche Durchgangsöffnungen (21) bilden, welche durch Segmente (22) der zweiten Elemente (4) sich gegenseitig überlappender Laschen (13, 14) begrenzt sind, wobei die Schlitze (20), einen Kopplungsbereich (23) bildend, in einer zu den ersten Elementen parallelen Richtung ausgerichtet sind, wobei ein Blockierelement (18), welches einen zylindrischen Körper oder Stab umfasst, durch die Schlitze eingefügt ist, um mit Abschnitten der zweiten Elemente der zwei überlappenden Laschen (13, 14) zusammenzuwirken.

2. Reihe nach Anspruch 1, wobei das Verstärkungselement (1) in einer Richtung der ersten Elemente (3) eine Länge aufweist, welche größer als 10 Meter ist, wobei die ersten Elemente (3) wenigstens zweimal so lang, optional zehnmal länger, als die zweiten Elemente (4) sind.

3. Reihe nach Anspruch 1 oder 2, wobei der Bereich eines transversalen Querschnitts der ersten Elemente wenigstens 5 mal größer als ein Bereich eines transversalen Querschnitts der zweiten Elemente ist,
wobei die ersten Elemente (3) und die zweiten Elemente (4) einen vollen transversalen Querschnitt aufweisen,
wobei die ersten Elemente (3) entlang einem gesamten longitudinalen Verlauf davon einen transversalen Querschnitt mit einem Bereich aufweisen, welcher größer als 20 mm², optional größer als 30 mm², ist, und
wobei die zweiten Elemente (4) entlang einem gesamten longitudinalen Verlauf davon einen transversalen Querschnitt mit einem Bereich aufweisen, welcher größer als 3 mm², operativ größer als 4 mm², ist.

4. Reihe nach einem der vorhergehenden Ansprüche, wobei die ersten Elemente (3) nicht gedehnt sind, oder wenn sie gedehnt sind, weniger als die zweiten Elemente gedehnt sind, und wobei die zweiten Elemente (4) entlang einer vorherrschenden Verlaufsrichtung davon, einer Bildung davon folgend, gedehnt sind und eine Struktur aufweisen, welche Molekülketten aufweist, welche entlang der vorherrschenden Verlaufsrichtung der zweiten Elemente (4) ausgerichtet sind, wobei eine molekulare Ausrichtung in der Struktur der zweiten Elemente stärker ausgeprägt ist als eine molekulare Ausrichtung in der Struktur der ersten Elemente.

5. Reihe nach einem der vorhergehenden Ansprüche, wobei die Netzstruktur (2) eine dreidimensionale Konfiguration aufweist, welche in einer transversalen Ansicht auf die ersten Elemente (3) einen zentralen Teil aufweist, welcher ein im Wesentlichen gerades Profil und longitudinale Ränder (209) aufweist, welche in Bezug auf den zentralen Teil gewellt oder gefaltet sind.

6. Reihe nach einem der vorhergehenden Ansprüche, wobei sich die ersten Elemente (3) und die zweiten Elemente (4) an den Knoten schneiden, um Maschen zu bilden, wobei wenigstens die zweiten Elemente (4) Abschnitte aufweisen, welche sich zwischen aufeinanderfolgenden Knoten erstrecken, wobei jeder der Abschnitte Endbereiche mit einer parallel zu den ersten Elementen (3) gemessenen Breite, welche, von einem Knoten beginnend, in einer Richtung einer Mittellinie der Abschnitte progressiv abnimmt, und einen zentralen Bereich mit einer Breite aufweist, welche im Wesentlichen konstant und kleiner als eine Breite der Endbereiche ist, und wobei die Netzstruktur (2) aufweist:
ein spezifisches Gewicht, welches größer als 200 g pro m² ist, optional zwischen 200 und 1200 g pro m² liegt;
einen spezifischen Zugwiderstand entlang der zweiten Elemente, welcher größer als 20 KN/m ist, insbesondere zwischen 20 und 200 KN/m umfasst ist, optional zwischen 60 und 200 KN/m liegt, wobei der Widerstand unter Verwendung des in der Beschreibung dargelegten Verfahrens gemessen wird.

7. Reihe nach einem der vorhergehenden Ansprüche, wobei das Verstärkungselement, an wenigstens einer Seite des Elements verbunden, ein laminares Begrenzungselement, zum Beispiel ein Kunststoffnetz oder ein Textil, oder ein nichtgewebtes Textil, aufweist, welches Durchgangslöcher aufweist, welche beträchtlich kleiner als die Durchgangslöcher der Netzstruktur sind.

## Revendications

1. Série comprenant
deux éléments de renfort ou plus (1) destinés aux applications géotechniques
chacun d'un type comprenant une structure monolithique en filet (2) constituée d'une matière plastique, ayant :
une pluralité de premiers éléments (3) écartés l'un de l'autre et présentant une conformation allongée dans un sens de développement principal respectif,
une pluralité de seconds éléments (4) écartés l'un de l'autre qui se développent sensiblement dans un sens transversal par rapport aux premiers éléments (3), les seconds éléments (4) ayant également une conformation allongée selon un sens de développement principal respectif,
la structure en filet (2) faisant preuve d'une longueur, mesurée dans un sens des premiers éléments (3), ayant une extension considérablement supérieure à une largeur mesurée dans un sens des seconds éléments (4),
suite à la formation de la structure en filet (2), les seconds éléments (4) étant étirés le long de leur sens de développement principal, donnant à la structure en filet (2) une largeur dans un sens des seconds éléments (4) qui est supérieure à 2 mètres,
lesdits premiers éléments ne font pas preuve d'étirage suite à leur formation ou faisant preuve d'un rapport d'étirage défini sous la forme d'un rapport entre une longueur finale des premiers éléments une fois que l'étirage a été effectué et une longueur initiale des premiers éléments avant une action d'étirage dessus, qui est compris entre 1 et 1,5 ;
les éléments de renfort étant flanqués transversalement et disposés longitudinalement selon un sens parallèle à un sens des premiers éléments, les éléments de renfort (1) étant connectés par des éléments de blocage (18) qui restreignent longitudinalement les bords flanqués des éléments de renfort adjacents,
où les éléments de renfort sont disposés afin de définir une zone de chevauchement (19) qui comprend une pluralité de fentes (20) qui forment des ouvertures de passage (21) délimitées par les segments (22) des seconds éléments (4) des rabats mutuellement chevauchants (13, 14), les fentes (20) étant alignées dans un sens parallèle aux premiers éléments, formant une zone de couplage (23), un élément de blocage (18), comprenant un corps cylindrique ou une barre, étant inséré à travers les fentes afin de coopérer avec les parties des seconds éléments des deux rabats chevauchants (13, 14).

2. Série selon la revendication 1, l'élément de renfort (1) faisant preuve d'une longueur dans un sens des premiers éléments (3) qui est supérieure à 10 mètres, les premiers éléments (3) étant au moins deux fois aussi longs, éventuellement dix fois plus longs que les seconds éléments (4).

3. Série selon la revendication 1 ou 2, la surface d'une section transversale des premiers éléments étant au moins 5 fois supérieure à une surface d'une section transversale des seconds éléments,
les premiers éléments (3) et les seconds éléments (4) faisant preuve d'une section transversale complète,
les premiers éléments (3) faisant preuve, le long de leur développement longitudinal complet, d'une section transversale ayant une surface supérieure à 20 mm², éventuellement supérieure à 30 mm² et
les seconds éléments (4) faisant preuve, le long de leur développement longitudinal complet, d'une section transversale ayant une surface supérieure à 3 mm², fonctionnellement supérieure à 4 mm².

4. Série selon l'une quelconque des revendications précédentes, dans laquelle les premiers éléments (3) ne sont pas étirés ou s'ils sont étirés sont moins étirés que les seconds éléments, et dans laquelle les seconds éléments (4) sont étirés le long de leur sens de développement principal suite à leur formation et font preuve d'une structure ayant des chaînes moléculaires orientées le long du sens de développement principal des seconds éléments (4), l'orientation moléculaire dans la structure des seconds éléments étant plus prononcée que l'orientation moléculaire dans la structure des premiers éléments.

5. Série selon l'une quelconque des revendications précédentes, dans laquelle la structure en filet (2) fait preuve d'une configuration tridimensionnelle ayant, en vue transversale par rapport aux premiers éléments (3), une partie centrale ayant un profil sensiblement droit et des bords longitudinaux (209) qui sont ondulés ou pliés par rapport à la partie centrale.

6. Série selon l'une quelconque des revendications précédentes, dans laquelle les premiers éléments (3) et les seconds éléments (4) entrent en intersection aux noeuds pour former des mailles, au moins les seconds éléments (4) faisant preuve de parties s'étendant entre des noeuds consécutifs, chacune des parties ayant des zones terminales ayant une largeur, mesurée parallèle aux premiers éléments (3), qui diminue progressivement en partant d'un noeud dans un sens d'une ligne médiane des parties et d'une zone centrale ayant une largeur qui est sensiblement constante et inférieure à une largeur des zones terminales, et où la structure en filet (2) fait preuve :
d'un poids spécifique supérieur à 200 g par m², éventuellement entre 200 et 1200 g par m² ;
d'une résistance spécifique à la traction, le long des seconds éléments, supérieure à 20 KN/m, en particulier comprise entre 20 et 200 KN/m, éventuellement entre 60 et 200 KN/m, la résistance étant mesurée en utilisant le procédé décrit dans la description.

7. Série selon l'une quelconque des revendications précédentes, dans laquelle l'élément de renfort présente, joint sur au moins un côté de l'élément, un élément à confinement laminaire, par exemple un filet en plastique ou un textile, ou un textile non-tissé, ayant des trous traversants qui sont considérablement plus petits que les trous traversants de la structure en filet.
